(19) Europäisches Patentamt
European Patent Office
Office européen des brevets

(11) **EP 3 836 548 A1**

(12) **EUROPEAN PATENT APPLICATION**
published in accordance with Art. 153(4) EPC

(43) Date of publication:
**16.06.2021 Bulletin 2021/24**

(21) Application number: **18935752.8**

(22) Date of filing: **26.09.2018**

(51) Int Cl.:
**H04N 19/54** (2014.01)   **H04N 13/00** (2018.01)

(86) International application number:
**PCT/CN2018/107530**

(87) International publication number:
**WO 2020/061797 (02.04.2020 Gazette 2020/14)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
**KH MA MD TN**

(71) Applicant: **HUAWEI TECHNOLOGIES CO., LTD.**
**Shenzhen, Guangdong 518129 (CN)**

(72) Inventors:
• **WAN, Shuang**
  **Shenzhen, Guangdong 518129 (CN)**

• **ZHANG, Fuwen**
  **Shenzhen, Guangdong 518129 (CN)**
• **HUANG, Wei**
  **Shenzhen, Guangdong 518129 (CN)**

(74) Representative: **Grünecker Patent- und**
  **Rechtsanwälte**
  **PartG mbB**
  **Leopoldstraße 4**
  **80802 München (DE)**

(54) **METHOD AND APPARATUS FOR COMPRESSING AND DECOMPRESSING 3D GRAPHIC DATA**

(57)   Embodiments of this application disclose a 3D graphics data compression method. The method includes: obtaining first 3D model data from a graphics application programming interface of a server; determining, based on a feature value of the 3D model data, a first role sequence to which the first 3D model data belongs; determining 3D model data that has highest similarity to the first 3D model data from the first role sequence; and obtaining a compression result of the first 3D model data based on the first 3D model data and the 3D model data that has the highest similarity. According to the method provided in this application, a most similar reference model is searched for in a category to which a 3D model belongs, a size of model search space is reduced, and a calculation amount is reduced. Further, a compression result is obtained based on the first model and the most similar reference model, redundant information is reduced, and a compression ratio is increased.

FIG. 2(a)

**Description**

**TECHNICAL FIELD**

This application relates to the field of multimedia communications, and in particular, to a 3D graphics data compression and decompression method and apparatus.

**BACKGROUND**

With development of graphics technologies, currently various types of 3-dimension (3-Dimension, 3D) applications are proliferating fast, such as a mobile terminal 3D game, a virtual reality (Virtual Reality, VR) scenario, and an augmented reality (Augmented Reality, AR) scenario. In addition, because cloud computing is characterized by ease of management, a large storage capacity, high stability, and the like, migrating a 3D application scenario from a terminal side to the cloud enables the graphics technologies to inherit the advantages of cloud computing. However, in a process of migrating a 3D application from a client such as a mobile phone or a personal computer (Personal Computer, PC) to a cloud server, a large amount of 3D data is migrated, which occupies very high bandwidth. For example, some 3D mobile phone games require approximately 15 MB of data transmitted per second. Currently, both wireless fidelity (Wireless Fidelity, WIFI) and the 4th generation mobile communication technology (the 4th Generation Mobile Communication Technology, 4G) in a mobile network use wireless signals. Actually, bandwidth stability is affected by an environment factor, and consequently a signal is usually unstable. To enable a large 3D application to normally run in a Wi-Fi or 4G network, 3D data needs to be compressed, to reduce bandwidth required in a data transmission process.
How to efficiently compress 3D data without affecting a visual effect is a challenge.

**SUMMARY**

Embodiments of this application provide a 3D graphics data compression and decompression method and apparatus, to improve compression efficiency of 3D graphics data and reduce bandwidth required for transmitting the 3D graphics data.
A first aspect of this application provides a 3D graphics data compression method. The method includes: obtaining first 3D model data from a graphics application programming interface API of a server; determining, based on a feature value of the 3D model data, a first role sequence corresponding to the first 3D model data, where the feature value is used to represent one or more of a shape feature, a spatial structure feature, a texture feature, or a color feature of the 3D model data, 3D model data that has a same feature value belongs to a same role sequence, and the first role sequence includes one or more pieces of 3D model data; determining 3D model data that has highest similarity to the first 3D model data from the first role sequence; and obtaining a compression result based on the first 3D model data and the 3D model data that has the highest similarity, where the compression result is used to represent the first 3D model data.
In the data compression method in this embodiment of this application, running and calculation of a 3D application are completed by the server, and GPU rendering and display of 3D graphics data are completed by a client. The server compresses the 3D graphics data, and sends compressed 3D graphics data to the client in real time. Then, the client decompresses the compressed 3D graphics data in real time, and the client completes GPU rendering and display of the 3D graphics data. Before the 3D graphics data is compressed, an animated role corresponding to the currently sent 3D model data is first determined, and a 3D model data sequence of the animated role is searched for a reference model, thereby reducing a size of model search space. Further, the data is compressed based on a feature that there is much redundant information between 3D model data and most similar 3D model data, thereby reducing redundant data and improving a compression ratio, without affecting fluency of a 3D animation.
In a possible implementation, the 3D graphics data is generated by the server, and rendered and displayed by the client.
In a possible implementation, the obtaining a compression result based on the first 3D model data and the 3D model data that has the highest similarity includes: obtaining a similarity value between the first 3D model data and the 3D model data that has the highest similarity; and determining a compression scheme of the first 3D model data based on the similarity value, and obtaining the compression result, where the compression result is used to represent the first 3D model data.
In a possible implementation, the similarity value is obtained based on at least one of machine learning, a neural network, or a coefficient of variation CV value.
In a possible implementation, the determining a compression scheme of the first 3D model data based on the similarity value, and obtaining the compression result includes: when the similarity value is less than or equal to a first threshold, obtaining a reference model identifier, where the compression result includes the reference model identifier,

and the reference model identifier is used to indicate the 3D model data that has the highest similarity.

In a possible implementation, the determining a compression scheme of the first 3D model data based on the similarity value, and obtaining the compression result includes: when the similarity value is greater than the first threshold and less than a second threshold, performing first compression on a residual value between the first 3D model data and the 3D model data that has the highest similarity, to obtain a first data packet, where the compression result includes the first data packet.

In a possible implementation, the determining a compression scheme of the first 3D model data based on the similarity value, and obtaining the compression result includes: when the similarity value is greater than or equal to the second threshold, performing second compression on the first 3D model data to obtain a second data packet, where the compression result includes the second data packet.

In this embodiment of this application, different compression policies and data sending policies are flexibly selected based on the similarity value between the first 3D model data and the best reference model, so that similarity between the first 3D model and the reference model is fully used to more flexibly and efficiently compress the 3D model data. On the premise of ensuring accuracy of transmitted data, a data is compressed as much as possible, to reduce an amount of transmitted data, thereby reducing bandwidth required for data transmission.

In a possible implementation, the determining, based on a feature value of the 3D model data, a first role sequence corresponding to the first 3D model data includes: determining that 3D model data that has the same feature value as the first 3D model data in historical 3D model data belongs to the first role sequence, to obtain the first role sequence, where the historical 3D model data includes 3D model data sent to the client before the first 3D model data.

In the data compression method in this embodiment of this application, before the 3D graphics data is compressed, the 3D model data that has the same feature value as the currently sent first 3D model data is first determined from the historical 3D model data that has been sent to the client, where the 3D model data that has the same feature value belongs to a same animated role, and a 3D model data sequence of the animated role is searched for a reference model, thereby reducing a size of model search space. Further, the data is compressed based on a feature that there is much redundant information between 3D models, thereby reducing redundant data and improving a compression ratio, without affecting fluency of a 3D animation. In this embodiment of this application, only the role sequence to which the first 3D model data belongs needs to be obtained without classifying all the historical 3D model data.

In a possible implementation, the determining, based on a feature value of the 3D model data, a first role sequence corresponding to the first 3D model data includes: determining 3D model data that has the same feature value as the first 3D model data; performing the second compression on the 3D model data that has the same feature value, to obtain a third data packet; decompressing the third data packet to obtain 3D model data obtained after second processing; and determining that the 3D model data obtained after the second processing belongs to the first role sequence.

To reduce an amount of transmitted data, the client receives intra-model compressed 3D model data. To ensure consistency between a reference model of the server and a reference model of the client, intra-model compression is performed on the current 3D model and then intra-model decompression is performed on the intra-model compressed 3D model to obtain processed 3D model data, and the processed 3D model data is used as a reference model in the first role sequence, to be kept consistent with a reference model of the client, thereby avoiding an error introduced by the second compression.

In a possible implementation, the determining, based on a feature value of the 3D model data, a first role sequence corresponding to the first 3D model data includes: classifying historical 3D model data based on the feature value of the 3D model data to obtain a role sequence list, where the historical 3D model data includes 3D model data sent to the client before the first 3D model data; and determining a role sequence that has the same feature value as the first 3D model data in the role sequence list as the first role sequence.

In the data compression method in this embodiment of this application, before the 3D graphics data is compressed, the historical 3D model data that has been sent to the client is first classified to obtain a plurality of role sequences, and then an animated role corresponding to the currently sent 3D model data is determined from the plurality of role sequences; and a 3D model data sequence of the animated role is searched for a reference model, thereby reducing a size of model search space. Further, the data is compressed based on a feature that there is much redundant information between 3D models, thereby reducing redundant data and improving a compression ratio, without affecting fluency of a 3D animation.

In a possible implementation, when the similarity value is less than or equal to the first threshold, the compression result further includes an identifier of the first role sequence, and the method further includes: performing lossless compression on the reference model identifier and the identifier of the first role sequence, and then sending the lossless compression result to the client.

In a possible implementation, when the similarity value is greater than the first threshold and less than the second threshold, the compression result further includes the reference model identifier and the identifier of the first role sequence, and the method further includes: performing lossless compression on the first data packet, the reference model identifier, and the identifier of the first role sequence, and then sending the lossless compression result to the client.

In a possible implementation, when the similarity value is greater than or equal to the second threshold, the compressed data further includes the identifier of the first role sequence, and the method further includes: performing lossless compression on the second data packet and the identifier of the first role sequence, and then sending the lossless compression result to the client.

In a possible implementation, the first compression includes quantization, and the second compression includes draco compression.

In a possible implementation, when the similarity value is greater than or equal to the second threshold, the method further includes: decompressing the second data packet to obtain first processed 3D model data; and determining that the first processed 3D model data belongs to the first role sequence.

In a possible implementation, the feature value includes one or more of a vertex quantity, texture coordinates, a vertex attribute, a HASH value of a texture map, or a model identifier.

In a possible implementation, the determining 3D model data role sequence that has highest similarity to the first 3D model data from the first role sequence includes: separately calculating an X-coordinate relative error rate rateX, a Y-coordinate relative error rate rateY, and a Z-coordinate relative error rate rateZ of the first 3D model data to each piece of 3D model data in the first role sequence; accumulating rateX, rateY, and rateZ to obtain a relative error sum of the first 3D model data to each piece of 3D model data in the first role sequence; and using 3D model data corresponding to a smallest relative error sum as the 3D model data that has the highest similarity.

In a possible implementation, the method further includes: performing lossless compression on 3D model data in the role sequence list to obtain lossless compressed data; storing the lossless compressed data in a persistence module; and transmitting the lossless compressed data to a pre-download module for downloading by the server or the client.

Before running a 3D application, the server and the client first download the reference model list from the pre-download module, such as a WEB server or a CDN. In this way, a reference model classification and accumulation process and a reference model transmission process are omitted during running of the 3D application, thereby reducing network bandwidth during running of the 3D application. A second aspect of this application provides a 3D graphics data compression method. The method includes: obtaining first 3D model data from a graphics application programming interface API; searching a role sequence list for a first role sequence corresponding to the first 3D model data, where the first role sequence includes at least one reference model; searching the first role sequence for a best reference model of the first 3D model data; and when a residual value between the first 3D model data and the best reference model is greater than a first threshold and less than a second threshold, performing residual compression on the residual value to obtain a first data packet, and sending the first data packet and an identifier of the best reference model to a client; or when the residual value is less than or equal to the first threshold, sending the identifier of the best reference model to the client; or when the residual value is greater than or equal to the second threshold, performing intra-model compression on the first 3D model data to obtain a second data packet, and sending the second data packet to a client.

According to the graphics data compression method provided in this application, the 3D model data is first classified, and the role sequence corresponding to the 3D model is searched for the best reference model, thereby reducing a size of model search space. Further, different compression policies and data sending policies are flexibly selected based on a similarity value between the first 3D model data and the best reference model, and similarity between the first 3D model and the reference model are fully used to more flexibly and efficiently compress the 3D model data. On the premise of ensuring accuracy of transmitted data, a data is compressed as much as possible, to reduce an amount of transmitted data, thereby reducing bandwidth required for data transmission.

In a possible implementation, the method further includes: sending an identifier of the first role sequence to the client.

In a possible implementation, before the first data packet and the identifier of the best reference model are sent to the client, lossless compression is performed on the first data packet and the best reference model to obtain a third data packet, and the third data packet is sent to the client; or before the identifier of the best reference model is sent to the client, lossless compression is performed on the identifier of the best reference model, and a lossless compressed identifier of the best reference model is sent to the client; or before the second data packet is sent to the client, lossless compression is performed on the second data packet to obtain a fourth data packet, and the fourth data packet is sent to the client.

A third aspect of this application provides a 3D graphics data decompression method. The method includes: receiving a first data packet, where the first data packet includes a role sequence identifier and indication information of compressed data of first 3D model data sent by a server, the role sequence identifier is used to indicate a first role sequence that has a same feature value as the first 3D model data, the feature value is used to represent one or more of a shape feature, a spatial structure feature, a texture feature, or a color feature of the 3D model data, 3D model data that has a same feature value belongs to a same role sequence, and the first role sequence includes one or more pieces of 3D model data; and determining a decompression scheme of the compressed data of the first 3D model data based on the indication information of the compressed data of the first 3D model data and the first role sequence, and obtaining a decompression result of the first 3D model data.

In this embodiment of this application, a decompression algorithm is flexibly selected based on content of the first data packet, to ensure that the decompression algorithm corresponds to a compression algorithm of the server, thereby correctly decompressing the transmitted 3D model data.

In a possible implementation, the determining a decompression scheme of the compressed data of the first 3D model data based on the indication information of the compressed data of the first 3D model data and the first role sequence, and obtaining a decompression result of the first 3D model data includes: when the first data packet includes residual compressed data and a reference model identifier, obtaining a first reference model from the first role sequence based on the reference model identifier, where the first reference model is data that has highest similarity to the first 3D model data in the first role sequence; performing first decompression on the residual compressed data to obtain residual data, where the residual data is a residual value between the first 3D model data and the first reference model; and adding the residual data and the first reference model to obtain the decompression result.

In a possible implementation, the determining a decompression scheme of the compressed data of the first 3D model data based on the indication information of the compressed data of the first 3D model data and the first role sequence, and obtaining a decompression result of the first 3D model data includes: when the first data packet includes the reference model identifier and does not include the residual compressed data, obtaining the first reference model from the first role sequence based on the reference model identifier; and using the first reference model as the decompression result.

In a possible implementation, the determining a decompression scheme of the compressed data of the first 3D model data based on the indication information of the compressed data of the first 3D model data and the first role sequence, and obtaining a decompression result of the first 3D model data includes: when the first data packet includes intra-model compressed data and does not include the reference model identifier, performing second decompression on the intra-model compressed data to obtain the decompression result.

In a possible implementation, when the first data packet includes the intra-model compressed data and does not include the reference model identifier, the method further includes: determining that the decompression result belongs to the first role sequence.

In a possible implementation, the first decompression includes dequantization, and the second decompression includes draco decompression.

In a possible implementation, the method further includes: classifying historical 3D model data based on the feature value to obtain a role sequence list, where the role sequence list includes the first role sequence, and the historical 3D model data includes 3D model data sent by the server before the first 3D model data.

In a possible implementation, the method further includes: downloading a role sequence list from a pre-download module, where the role sequence list includes the first role sequence.

A fourth aspect of this application provides a 3D graphics data compression apparatus. The apparatus includes: a data obtaining module, configured to obtain first 3D model data from an application programming interface API; a role classification module, configured to determine, based on a feature value of the 3D model data, a first role sequence corresponding to the first 3D model data, where the feature value is used to represent one or more of a shape feature, a spatial structure feature, a texture feature, or a color feature of the 3D model data, 3D model data that has a same feature value belongs to a same role sequence, and the first role sequence includes one or more pieces of 3D model data; a reference model determining module, configured to determine 3D model data that has highest similarity to the first 3D model data from the first role sequence; and a first compression module, configured to obtain a compression result based on the first 3D model data and the 3D model data that has the highest similarity, where the compression result is used to represent the first 3D model data.

In a possible implementation, the first compression module is specifically configured to obtain a similarity value between the first 3D model data and the 3D model data that has the highest similarity; and determine a compression scheme of the first 3D model data based on the similarity value, and obtain the compression result, where the compression result is used to represent the first 3D model data.

In a possible implementation, when the similarity value is less than or equal to a first threshold, the first compression module is specifically configured to obtain a reference model identifier, where the compression result includes the reference model identifier, and the reference model identifier is used to indicate the 3D model data that has the highest similarity.

In a possible implementation, when the similarity value is greater than the first threshold and less than a second threshold, the first compression module is specifically configured to perform first compression on a residual value between the first 3D model data and the 3D model data that has the highest similarity, to obtain a first data packet, where the compression result includes the first data packet.

In a possible implementation, when the similarity value is greater than or equal to the second threshold, the first compression module is specifically configured to perform second compression on the first 3D model data to obtain a second data packet, where the compression result includes the second data packet.

In a possible implementation, the role classification module is specifically configured to determine that 3D model data that has the same feature value as the first 3D model data in historical 3D model data belongs to the first role sequence, to obtain the first role sequence, where the historical 3D model data includes 3D model data sent to a client before the first 3D model data.

In a possible implementation, the role classification module is specifically configured to classify historical 3D model data based on the feature value of the 3D model data to obtain a role sequence list, where the historical 3D model data includes 3D model data sent to a client before the first 3D model data; and determine a role sequence that has the same feature value as the first 3D model data in the role sequence list as the first role sequence.

In a possible implementation, the apparatus further includes a second compression module. When the similarity value is less than or equal to the first threshold, the compression result further includes an identifier of the first role sequence, and the second compression module is configured to perform lossless compression on the reference model identifier and the identifier of the first role sequence, and then send the lossless compression result to the client. When the similarity value is greater than the first threshold and less than the second threshold, the compression result further includes the reference model identifier and the identifier of the first role sequence, and the second compression module is configured to perform lossless compression on the first data packet, the reference model identifier, and the identifier of the first role sequence, and then send the lossless compression result to the client. When the similarity value is greater than or equal to the second threshold, the compressed data further includes the identifier of the first role sequence, and the second compression module is configured to perform lossless compression on the second data packet and the identifier of the first role sequence, and then send the lossless compression result to the client.

In a possible implementation, the first compression includes quantization, and the second compression includes draco compression.

In a possible implementation, the apparatus further includes a decompression module. When the similarity value is greater than or equal to the second threshold, the decompression module is configured to decompress the second data packet to obtain first processed 3D model data; and determine that the first processed 3D model data belongs to the first role sequence.

In a possible implementation, the feature value includes one or more of a vertex quantity, texture coordinates, a vertex attribute, a HASH value of a texture map, or a model identifier.

In a possible implementation, the reference model determining module is specifically configured to separately calculate an X-coordinate relative error rate rateX, a Y-coordinate relative error rate rateY, and a Z-coordinate relative error rate rateZ of the first 3D model data to each piece of 3D model data in the first role sequence; accumulate rateX, rateY, and rateZ to obtain a relative error sum of the first 3D model data to each piece of 3D model data in the first role sequence; and use 3D model data corresponding to a smallest relative error sum as the 3D model data that has the highest similarity.

In a possible implementation, the apparatus further includes a persistence module and a pre-download module. The persistence module is configured to store a lossless compression result of 3D model data in the role sequence list; and the pre-download module is configured to store the lossless compression result for downloading by the server or the client.

A fifth aspect of this application provides a 3D graphics data decompression apparatus. The apparatus includes: a receiving module, configured to receive a first data packet, where the first data packet includes a role sequence identifier and indication information of compressed data of first 3D model data sent by a server, the role sequence identifier is used to indicate a first role sequence that has a same feature value as the first 3D model data, the feature value is used to represent one or more of a shape feature, a spatial structure feature, a texture feature, or a color feature of the 3D model data, 3D model data that has a same feature value belongs to a same role sequence, and the first role sequence includes one or more pieces of 3D model data; and a decompression module, configured to determine a decompression scheme of the compressed data of the first 3D model data based on the indication information of the compressed data of the first 3D model data and the first role sequence, and obtain a decompression result of the first 3D model data.

In a possible implementation, the decompression module is specifically configured to: when the first data packet includes residual compressed data and a reference model identifier, obtain a first reference model from the first role sequence based on the reference model identifier, where the first reference model is data that has highest similarity to the first 3D model data in the first role sequence; perform first decompression on the residual compressed data to obtain residual data, where the residual data is a residual value between the first 3D model data and the first reference model; and add the residual data and the first reference model to obtain the decompression result.

In a possible implementation, the decompression module is specifically configured to: when the first data packet includes the reference model identifier and does not include the residual compressed data, obtain the first reference model from the first role sequence based on the reference model identifier; and use the first reference model as the decompression result.

In a possible implementation, the decompression module is specifically configured to: when the first data packet includes intra-model compressed data and does not include the reference model identifier, perform second decompression on the intra-model compressed data to obtain the decompression result.

In a possible implementation, the apparatus further includes a determining module, configured to: when the first data packet includes the intra-model compressed data and does not include the reference model identifier, determine that the decompression result belongs to the first role sequence.

In a possible implementation, the first decompression includes dequantization, and the second decompression includes draco decompression.

In a possible implementation, the apparatus further includes a role classification module, configured to classify historical 3D model data based on the feature value to obtain a role sequence list, where the role sequence list includes the first role sequence, and the historical 3D model data includes 3D model data sent by the server before the first 3D model data.

In a possible implementation, the apparatus further includes a pre-download module, configured to store a role sequence list, where the role sequence list includes the first role sequence.

A sixth aspect of this application provides a 3D graphics data compression apparatus. The apparatus includes a processor and a receiving interface. The processor reads software instructions from a memory to implement the following operations: obtaining, through the receiving interface, first 3D model data from a graphics application programming interface API of a server; determining, based on a feature value of the 3D model data, a first role sequence corresponding to the first 3D model data, where the feature value is used to represent one or more of a shape feature, a spatial structure feature, a texture feature, or a color feature of the 3D model data, 3D model data that has a same feature value belongs to a same role sequence, and the first role sequence includes one or more pieces of 3D model data; determining 3D model data that has highest similarity to the first 3D model data from the first role sequence; and obtaining a compression result based on the first 3D model data and the 3D model data that has the highest similarity, where the compression result is used to represent the first 3D model data.

In a possible implementation, the apparatus further includes the memory. The memory is configured to store program instructions, and the program instructions are used to drive the processor to perform the foregoing operations.

In a possible implementation, the memory includes at least one of a computer-readable storage medium, a floppy disk device, a hard disk device, an optical disk device, or a magnetic disk device.

In a possible implementation, the processor is further configured to perform the method according to any one of the first aspect, the second aspect, or the possible implementations of the first aspect or the second aspect.

A seventh aspect of this application provides a 3D graphics data decompression apparatus. The apparatus includes a processor and a receiving interface. The receiving interface is configured to receive a first data packet, where the first data packet includes a role sequence identifier and indication information of compressed data of first 3D model data sent by a server, the role sequence identifier is used to indicate a first role sequence that has a same feature value as the first 3D model data, the feature value is used to represent one or more of a shape feature, a spatial structure feature, a texture feature, or a color feature of the 3D model data, 3D model data that has a same feature value belongs to a same role sequence, and the first role sequence includes one or more pieces of 3D model data; and the processor reads software instructions from a memory to determine a decompression scheme of the compressed data of the first 3D model data based on the indication information of the compressed data of the first 3D model data and the first role sequence, and obtain a decompression result of the first 3D model data.

In a possible implementation, the processor is further configured to perform the method according to any one of the third aspect or the possible implementations of the third aspect.

An eighth aspect of this application provides a computer-readable storage medium. The computer-readable storage medium stores an instruction. When the instruction is run on a computer or a processor, the computer or the processor is enabled to perform the method according to any one of the first aspect, the second aspect, the third aspect, or the possible implementations of the first aspect, the second aspect, or the third aspect.

A ninth aspect of this application provides a computer program product including an instruction. When the computer program product is run on a computer or a processor, the computer or the processor is enabled to perform the method according to any one of the first aspect, the second aspect, the third aspect, or the possible implementations of the first aspect, the second aspect, or the third aspect.

## BRIEF DESCRIPTION OF DRAWINGS

FIG. 1 is a schematic diagram of an example application scenario according to an embodiment of this application;
FIG. 2(a) is a schematic diagram of an example application architecture of a server and a client according to an embodiment of this application;

FIG. 2(b)-1 and FIG. 2(b)-2 are a schematic diagram of an example application architecture of a server and a client according to an embodiment of this application;

FIG. 3 is a schematic diagram of an example hardware architecture of a server and a client according to an embodiment of this application;

FIG. 4 is a flowchart of a 3D graphics data compression method according to an embodiment of this application;

FIG. 5 is a flowchart of a 3D graphics data compression method according to an embodiment of this application;

FIG. 6(a) is a flowchart of a 3D model data classification method according to an embodiment of this application;

FIG. 6(b) is a schematic diagram of a 3D model data classification result according to an embodiment of this application;

FIG. 7 is a flowchart of an example method for determining a role sequence corresponding to first 3D model data from a role sequence list according to an embodiment of this application;

FIG. 8 is a flowchart of an example method for searching for a best reference model according to an embodiment of this application;

FIG. 9 is a flowchart of method for calculating a similarity value between 3D model data according to an embodiment of this application;

FIG. 10 is a flowchart of a method for making a reference model persistent according to an embodiment of this application; and

FIG. 11 is a flowchart of a data decompression method according to an embodiment of this application.

## DESCRIPTION OF EMBODIMENTS

In the embodiments of the specification, claims, and accompanying drawings of this application, the terms "first", "second", and so on are intended to distinguish between similar objects but do not necessarily indicate a specific order or sequence. Moreover, the terms "include" and "have" and any other variants thereof are intended to cover non-exclusive inclusion. For example, a method, system, product, or device that includes a series of steps or units is not necessarily limited to those expressly listed steps or units, but may include other steps or units that are not expressly listed or inherent to such a process, method, product, or device.

It should be understood that, in this application, "at least one" means one or more, and "a plurality of" means two or more. The term "and/or" is used to describe an association relationship between associated objects, and represents that three relationships may exist. For example, "A and/or B" may represent the following three cases: Only A exists, only B exists, and both A and B exist, where A and B may be singular or plural. The character "/" generally indicates an "or" relationship between the associated objects. The term "at least one of the following items" or a similar expression thereof indicates any combination of these terms, including a single term or any combination of plural terms. For example, at least one of a, b, or c may indicate a, b, c, "a and b", "a and c", "b and c", or "a, b, and c", where a, b, and c may be singular or plural.

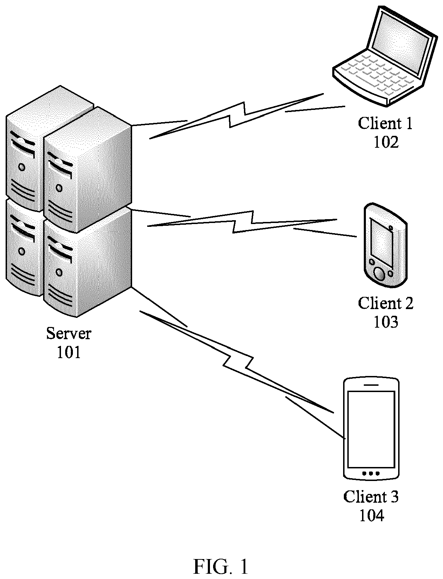

A 3D application is migrated to a cloud server, the cloud server completes running and calculation of the 3D application, and a client completes GPU rendering and display of 3D graphics data. In this scenario, a large amount of 3D application data needs to be sent from the cloud server to the client, which imposes a very high network bandwidth requirement. For example, the client includes but is not limited to a mobile phone, a personal computer, a notebook computer, and an intelligent game console. If a mobile phone game "Arena of Valor" is migrated to the cloud server, to ensure that a mobile phone end of a game user can fluently run the game, approximately 15 MB of 3D data needs to be transmitted per second. Therefore, to enable a 3D application such as "Arena of Valor" to normally run in a Wi-Fi or 4G network, 3D data needs to be efficiently compressed. The embodiments of this application provide a compression method, to compress 3D model data. First, 3D models are classified based on a feature that there is much repeated data between 3D models, where 3D models that belong to a same animated role are classified under one role sequence; and a role sequence corresponding to a current 3D model is found. Then, the animated role sequence is searched for a best reference model of the current 3D model, and a compression result of the current 3D model data is obtained based on a similarity value between the current 3D model data and the best reference model, thereby reducing data redundancy, so that a very high compression ratio can be obtained. FIG. 1 is a schematic diagram of an example application scenario according to an embodiment of this application. The application scenario includes at least one server 101 and at least one client. The server may be a hardware server, a virtual server, or the like. The client may be a portable notebook computer 102, an intelligent game console 103, a smartphone 104, or the like. Alternatively, the client may be a tablet or the like. In this scenario, both the server and the client are capable of executing a graphics drawing instruction. It should be understood that the graphics drawing instruction herein includes but is not limited to an open graphics library (Open Graphics Library, OpenGL), an OpenGL for Embedded Systems (OpenGL for Embedded Systems, OpenGL ES), Direct3D, Vulkan, and the like. In this embodiment of this application, the server may include a hardware graphics processing unit (Graphics Processing Unit, GPU), and execute a graphics drawing instruction by using the hardware GPU; or may not include a hardware GPU, and simulate execution of a graphics drawing instruction by using a software module in a central processing unit (Central Processing Unit, CPU), or may execute a related software module by using another general-purpose processor or a specific processor, such as an image signal processor (Image Signal Processor, ISP) or a digital signal processor (Digital Signal Processor, DSP), to execute a graphics drawing instruction. In this scenario, the server communicates with the client by using a network. The network herein includes but is not limited to a local area network, a wide area network, the Internet, a wireless network, and the like.

The server runs a 3D application, and the 3D application invokes a graphics application programming interface (Application Programming Interface, API) in a running process. The graphics API includes a drawing instruction, a drawing resource, and the like. The drawing resource has a very large amount of 3D model data. It should be understood that the graphics API herein includes but is not limited to an OpenGL, Direct3D, Vulkan, and the like. The drawing resource includes but is not limited to a graphics texture, a shader Shader, a vertex rendering engine (Vertex Shader), a pixel rendering engine (Pixel Shader), a model, and the like. In an optional case, the server obtains 3D application data from the API, and the server sends the 3D application data to the client by using the network. The 3D application data includes 3D model data, and the 3D model data accounts for a relatively large proportion of the 3D data. Correspondingly, the client also runs a 3D application. The application receives the 3D application data sent by the server by using the network, and the application of the client enables the 3D application data to finally display on a display screen of the client through GPU rendering.

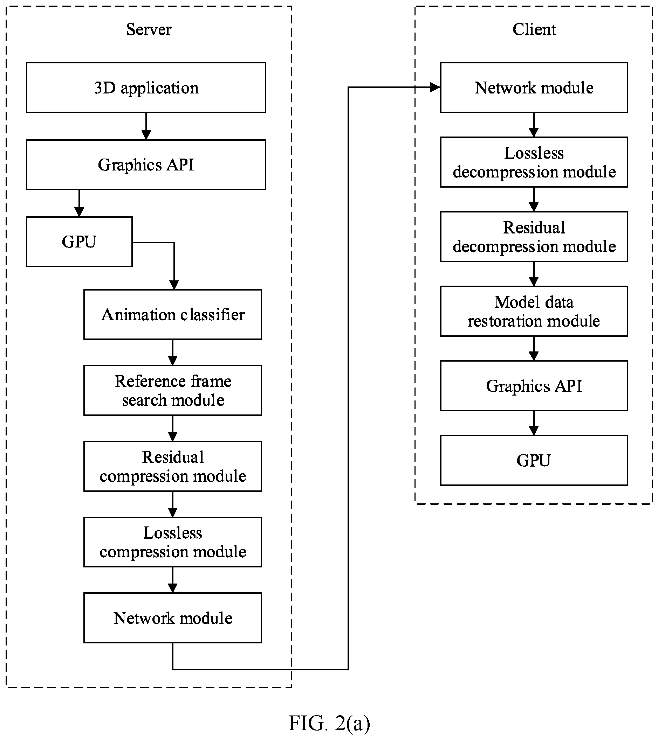

The 3D application usually has a very large amount of application data, and also has a very high network bandwidth requirement. Therefore, to reduce the network bandwidth requirement and improve a 3D data compression ratio, as shown in FIG. 2(a), an embodiment of this application provides an architectural diagram of an application system of 3D graphics data compression. The application system includes a server and a client. It should be understood that, for the server and the client in FIG. 2(a), refer to the descriptions of the server and the client in FIG. 1. In this embodiment of this application, the server completes 3D model data compression, and the client completes 3D model data decompression.

The following uses FIG. 2(a) as an example to describe an architecture of the server and the client.

The server includes a 3D application, and the 3D application invokes a graphics API in a running process of the 3D application. The graphics API includes 3D model data.

The server further includes a GPU. When the graphical API is sent to the GPU of the server, the 3D model data is parsed out from the API.

Optionally, the server includes a data obtaining module (not shown in the figure), configured to obtain the 3D model data from the API.

The server further includes an animation classifier, which may also be referred to as a role classifier or a role classification module, configured to classify 3D model data, for example, may classify 3D model data that has a same feature value under one type, to obtain one or more role sequences, where each role sequence includes one or more pieces of 3D model data. The animation classifier is further configured to obtain a first role sequence corresponding to first 3D model data. It should be understood that one role sequence may be considered as one animated role, and 3D model data in one corresponding role sequence may be considered as several key frame models constituting one animated role. For example, if there are a total of three animated roles in a 3D application scenario: a master, a hostess, and a pet dog, three role sequences may be obtained by classifying 3D model data in the 3D application scenario. For example, the master is a role sequence 1, the hostess is a role sequence 2, and the pet dog is a role sequence 3. Correspondingly, 3D model data in the role sequence 1 is a key frame model that belongs to the master, 3D model data in the role sequence 2 is a key frame model that belongs to the hostess, and 3D model data in the role sequence 3 is a key frame model that belongs to the pet dog. For example, the feature value may be a vertex quantity, a vertex attribute value including a vertex attribute length, a HASH value of a texture map, or a shader of the 3D model data. A 3D model data classification method may further include a deep learning classification method, a support vector machine classification method, and the like.

The server further includes a reference frame search module or a reference model determining module, configured to search the first role sequence for a best reference model of the first 3D model data. It should be understood that, in this embodiment of this application, the best reference model may be 3D model data closest to the first 3D model data, or may be 3D model data that has highest similarity to the first 3D model data. The role sequence list includes one or more role sequences. The role sequences are obtained by the animation classifier through classification. In an optional case, the role sequence list may be loaded from a hard disk, a solid state drive (Solid State Drives, SSD), or the like, or may be pre-downloaded from a WEB server, a content delivery network (Content Delivery Network, CDN), or the like, without classification and calculation. Further, the reference frame search module may further output a similarity value V between the first 3D model data and the best reference model. In an optional case, the server may further include a similarity value calculation module, configured to calculate the similarity value V between the first 3D model data and the found best reference model.

The server further includes a residual compression module or a first compression module. If the similarity value falls within a specific range, residual data between the first 3D model data and the 3D model data that has the highest similarity is calculated. The residual compression module is configured to perform residual compression on the residual data. For example, the residual compression is usually lossy compression, but lossless residual compression that may occur in the future is not excluded. The residual compression may include quantization and entropy encoding, and the residual compression module first quantizes the residual data and then performs entropy encoding on quantized residual data to obtain residual compressed data. Optionally, the residual compression may include only quantization, and correspondingly, the residual compression module may only quantize the residual data to obtain residual compressed data.

The server may further include a lossless compression module or a second compression module, configured to perform lossless compression on data to be transmitted to the client. It should be understood that the data to be transmitted to the client may include the residual compressed data, intra-model compressed data, a reference model identifier, or the like.

The server further includes a network module, configured to transmit a lossless compressed data packet to the client. It should be understood that the network module may be a software module, for example, may be a transmission control protocol (Transmission Control Protocol, TCP) or a user datagram protocol (User Datagram Protocol, UDP). Alternatively, the network module may be hardware, for example, may be Wi-Fi, 4G, or wired Ethernet.

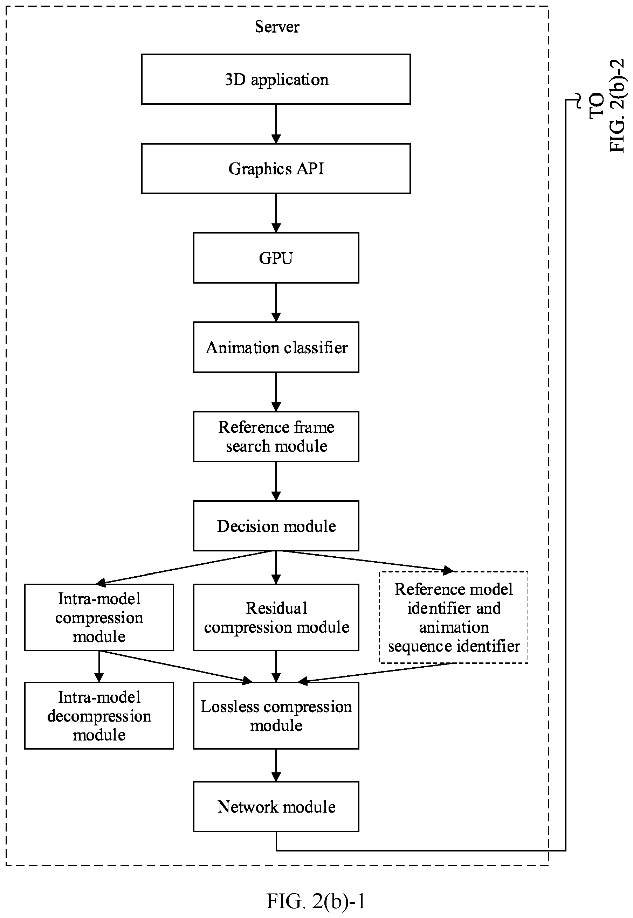

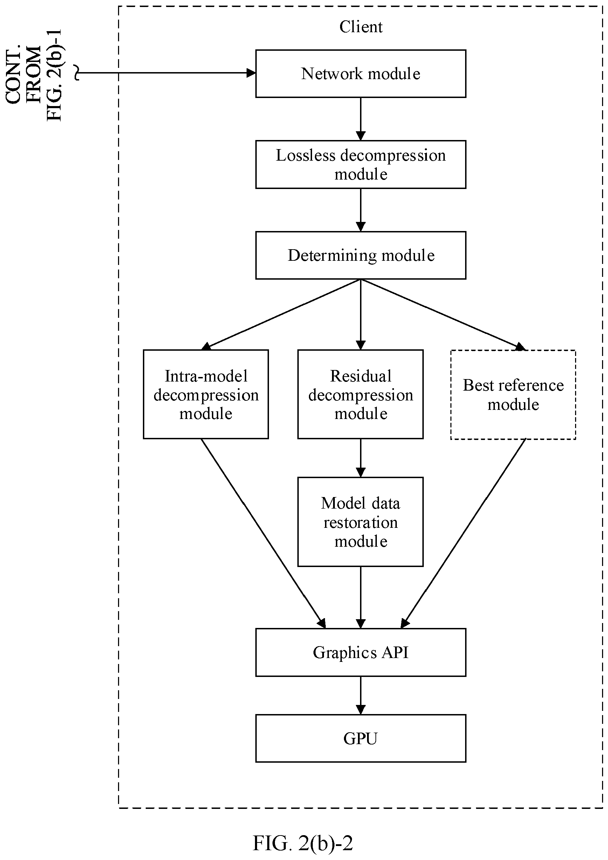

In a possible case, FIG. 2(b)-1 and FIG. 2(b)-2 are a schematic diagram of another architecture of a server and a client for 3D graphics data compression according to an embodiment of this application. The server may further include a decision module. The decision module is configured to determine a range of the similarity value V between the first 3D model data and the best reference model, and select a corresponding compression manner based on a determining result. For example, if there is very high similarity between the first 3D model data and the best reference model, the first 3D model data may be directly replaced with the best reference model data and an identifier of the best reference model may be sent to the client, without performing residual compression. For example, when there is very high similarity between the first 3D model data and the best reference model, the reference model identifier is sent to the client, or the reference model identifier and a role sequence identifier may be sent to the client. The server may further include an intra-model compression module. If there is very low similarity between the first 3D model data and the best reference model, intra-model compression is directly performed on the first 3D model data. For example, the intra-model compression may be draco compression. It should be understood that the intra-model compression is usually lossy compression, and may alternatively be lossless compression. The server may further include an intra-model decompression module, configured to perform intra-model decompression on the intra-model compressed 3D model data, where obtained decompressed data is classified under the first role sequence as a reference model.

It should be understood that function modules such as the data obtaining module, the role classification module, the reference model determining module, the first compression module, the second compression module, the network module, the decision module, the intra-model compression module, and the intra-model decompression module of the server may be all software modules. These software modules are completed by software instructions running on a processor. The software instructions may be stored in a memory. The memory may be a memory included in the server or the client, or may be an external memory. Optionally, the function modules may be partially completed by a hardware circuit or a logic circuit.

The client includes a network module, configured to receive the compressed data packet sent by the server. For example, the network module of the client may be a software module, for example, may be a TCP or a UDP. Alternatively, the network module may be a hardware module, for example, may be Wi-Fi, 4G, or wired Ethernet.

The client further includes a lossless decompression module, configured to perform lossless decompression on the compressed data packet received by the network module, to obtain a second data packet. The second data packet may include the residual compressed data.

The client further includes a residual decompression module, configured to: when the second data packet includes the residual compressed data, perform residual decompression on the residual compressed data to obtain the residual data. For example, the residual decompression module may perform entropy decoding and dequantization on the residual compressed data to obtain the residual data. Optionally, the residual decompression module may only dequantize the residual compression module to obtain the residual data. The second data packet may further include the reference model identifier. The reference model identifier is a 1-level mapping identifier, and each reference model in the role sequence list has a unique identifier. The best reference model can be uniquely specified from the role sequence list based on the reference model identifier. In an optional case, the second data packet may include the reference model identifier and the role sequence identifier. The reference model identifier and the role sequence identifier indicate 2-level mapping. The first role sequence corresponding to the first 3D model data is obtained based on the role sequence identifier. Further, the best reference model is obtained from the first role sequence based on the reference model identifier.

The client may further include a model data restoration module, configured to obtain a target 3D model based on the residual data and the best reference model. The target 3D model data is the first 3D model data finally obtained by the client. Specifically, the residual data and the best reference are added to obtain the target 3D model data.

As shown in FIG. 2(b)-2, in an optional case, the client may further include a determining module, configured to determine a data type of the second data packet. If the second data packet includes the reference model identifier and does not include the residual compressed data, the best reference model is obtained from the first role sequence list based on the reference model identifier, and the best reference model is used as the target 3D model. Optionally, if the second data packet includes the reference model identifier and the role sequence identifier and does not include the residual compressed data, the first role sequence is obtained from the role sequence list based on the role sequence identifier, and the best reference model is obtained from the first role sequence based on the reference model identifier.

As shown in FIG. 2(b)-2, the client further includes an intra-model decompression module. If the second data packet does not include the reference model identifier and includes the intra-model compressed data, the intra-model decompression module is configured to perform intra-model decompression on the intra-model compressed data, where obtained decompressed data is used as the target 3D model. In this case, the intra-model decompressed data is classified under a role sequence list on a client side as a reference model in the first role sequence.

The client sends the target 3D model to a GPU by using a graphical API, and then displays rendered 3D model data on a display device after performing GPU rendering on the target 3D model.

It should be understood that in this embodiment of this application, the GPU of the server and the GPU of the client may be hardware GPUs, or may be software modules running on CPUs or other general-purpose processors, or may be software modules running on dedicated processors.

In this embodiment of this application, the 3D model data is first classified, and the role sequence corresponding to the 3D model is searched for the best reference model, thereby reducing a size of model search space. Further, the residual data is compressed based on a feature that there is much redundant information between 3D models, thereby reducing redundant data and improving a compression ratio. The client performs residual decompression on the residual compressed data, and then restores the current 3D model based on the best reference model and the residual data. On the premise of ensuring accuracy of transmitted data, a data is compressed as much as possible, to reduce an amount of transmitted data, thereby reducing bandwidth required for data transmission.

In the embodiment of this application shown in FIG. 2(b)-1 and FIG. 2(b)-2, different compression policies and data sending policies are flexibly selected based on a residual value between the first 3D model data and the best reference model, so that the similarity between the current 3D model and the reference model is fully used to more flexibly and efficiently compress the 3D model data. Correspondingly, the client flexibly selects a decompression algorithm based on content of the second data packet, to ensure that the decompression algorithm corresponds to a compression algorithm of the server, thereby correctly decompressing the transmitted 3D model data. If the second data packet includes the identifier of the best reference model and the residual compressed data, residual decompression is performed on the residual compressed data, and the target 3D model is restored based on the residual data and the best reference model data. If the second data packet includes only the identifier of the best reference model, the best reference model is used as the target 3D model. If the second data packet does not include the reference model identifier, intra-model decompression is performed on the intra-model compressed data, an intra-model decompression result is used as the target 3D model, and the target 3D model data is classified under the role sequence corresponding to the first 3D model data as a new reference model.

It should be understood that, in this embodiment of this application, the server and the client are divided from a function perspective. During actual implementation, there may be another division manner. For example, a plurality of modules may be combined or integrated into another system. Mutual couplings between modules may be implemented by using some interfaces. These interfaces are usually electrical communications interfaces, but mechanical interfaces or other forms of interfaces may be not excluded. Therefore, the modules described as separate parts may or may not be physically separate, and may be located in one place or may be distributed at different locations in a same device or different devices. All the function modules of the server and the client may be software modules. In other words, all functions are completed by using software. For example, all the function modules of the server and the client may be completed by using software instructions running on a processor. The software instructions may be stored in a memory. The memory may be a memory included in the server or the client, or may be an external memory. Optionally, some function modules of the server and the client are completed by using software, and the other functions are completed by using hardware. This is not limited in this embodiment of this application.

The foregoing describes the architecture of the server and the client in the embodiments of this application from a perspective of a modular function entity. The following separately describes the server and the client in the embodiments of this application from a perspective of processor hardware.

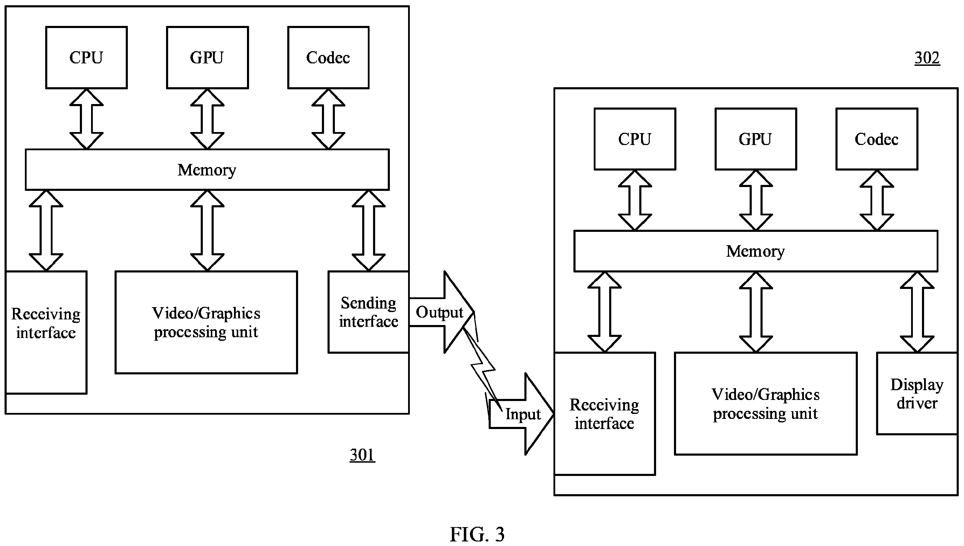

FIG. 3 is a schematic diagram of a hardware architecture of a 3D graphics data compression system according to an embodiment of this application. The 3D graphics data compression system includes a server 301 and a client 302.

Optionally, the server 301 includes a central processing unit CPU, a memory, a coder/decoder, a dedicated video/graphics processing unit, a receiving interface, a sending interface, and the like. Optionally, the server 301 may further include a GPU, a microprocessor, a microcontroller (Microcontroller Unit, MCU), and the like. In an optional case, the parts of the server 301 are coupled to each other through a connector. The connector may include various types of interfaces, transmission lines, buses, or the like. This is not limited in this embodiment. It should be understood that, in the embodiments of this application, coupling is mutual association in a specific manner, including direct connection or indirect connection performed by using another device. After obtaining 3D model data from an API, the server compresses the 3D model data by using the CPU, the video/graphics processing unit, or the coder/decoder, and sends compressed 3D model data to the client through the sending interface of a network module.

In an optional case, the parts are integrated on a same chip to form a core chip of the server 301 together. In another optional case, the CPU, the GPU, the decoder, an input interface, and a transmitter are integrated on one chip, and the parts inside the chip access an external memory through a bus. The dedicated video/graphics processing unit may be integrated with the CPU on a same chip, or may exist as a separate processor chip. In this embodiment of this application, the chip is a system manufactured on a same semiconductor substrate by using an integrated circuit process, and is also referred to as a semiconductor chip. The chip may be a set of integrated circuits manufactured on the substrate (which is usually a semiconductor material such as silicon) by using the integrated circuit process. An outer layer of the chip is usually encapsulated by a semiconductor encapsulation material. The integrated circuit may include various types of functional devices. Each type of functional device includes a logic gate circuit, or a transistor such as a metal-oxide semiconductor (Metal-Oxide-Semiconductor, MOS) transistor, a bipolar junction transistor, or a diode, or may include another component such as a capacitor, a resistor, or an inductor. Each functional device may work independently or work under the action of necessary driver software, and may implement various types of functions such as communication, an operation, or storage.

For example, the CPU may be configured to implement some or all of operations in the embodiments of this application, for example, may implement 3D model classification, 3D model feature value extraction, residual compression, intra-model compression, residual decompression, and intra-model decompression. Optionally, the CPU may be a single-core (single-CPU) processor or a multi-core (multi-CPU) processor. Optionally, the CPU may be a processor group including a plurality of processors, and the plurality of processors are coupled to each other through one or more buses. In an optional case, image and video processing are partially completed by the GPU and partially completed by the dedicated video/graphics processing unit, or may be completed by using software code running on a general-purpose CPU or GPU.

Correspondingly, the client 302 includes a central processing unit CPU, a memory, a GPU, a coder, a coder/decoder, a dedicated video/graphics processing unit, a receiving interface, and the like. Optionally, the client 302 may further include a microprocessor, a microcontroller (Microcontroller Unit, MCU), a display driver, a display screen, and the like. The display driver is configured to drive the display screen to display a 3D graph.

The client 302 receives, through the receiving interface, the compressed data sent by the server through the sending interface of the network module, and decompresses the compressed data in the CPU, the GPU, or the video/graphics processing unit to obtain decompressed 3D model data. Rendered 3D model data is displayed on the display screen of the client after GPU rendering is performed on the decompressed 3D model data. In an optional case, the parts of the client 302 are coupled to each other through a connector. The connector may include various types of interfaces, transmission lines, buses, or the like. This is not limited in this embodiment. In an optional case, the parts are integrated on a same chip to form a core chip of the client 302 together. In another optional case, the CPU, the GPU, the decoder, an input interface, and a transmitter are integrated on one chip, and the parts inside the chip access an external memory through a bus. The dedicated video/graphics processing unit may be integrated with the CPU on a same chip, or may exist as a separate processor chip. For example, the CPU may be configured to implement some or all of operations implemented by the client in the embodiments of this application, for example, may implement residual decompression, intra-model decompression, and GPU rendering. Optionally, the CPU may be a single-core (single-CPU) processor or a multi-core (multi-CPU) processor. Optionally, the CPU may be a processor group including a plurality of processors, and the plurality of processors are coupled to each other through one or more buses. In an optional case, image and video processing are partially completed by the GPU and partially completed by the dedicated video/graphics processing unit, or may be completed by using software code running on a general-purpose CPU or GPU.

The memory in each of the server 301 and the client 302 may be configured to store a computer program instruction, including an operating system (Operation System, OS), various types of user applications, and various types of computer program code including program code used to perform the solutions in this application. Alternatively, the memory may be configured to store video data, audio data, subtitle data, 3D model data in a role list, and the like. The CPU may be configured to execute the computer program code stored in the memory, to implement the method in the embodiments of this application. The various types of executed program code may be considered as drivers of the CPU. Optionally, the memory may be a non-power-off volatile memory, such as an embedded multimedia card (Embedded Multi Media Card, EMMC), a universal flash storage (Universal Flash Storage, UFS), a read-only memory (Read-Only Memory, ROM), or another type of static storage device that can store static information and instructions, or may be a power-off volatile memory (volatile memory), such as a random access memory (Random Access Memory, RAM) or another type of dynamic storage device that can store information and instructions, or may be an electrically erasable programmable read-only memory (Electrically Erasable Programmable Read-Only Memory, EEPROM), a compact disc read-only memory (Compact Disc Read-Only Memory, CD-ROM) or another optical disk storage, an optical disc storage (including a compact disc, a laser disc, an optical disc, a digital versatile disc, a Blu-ray disc, and the like), a magnetic disk storage medium or another magnetic storage device, or any other computer-readable storage medium that can be configured to carry or store program code in a form of an instruction or a data structure and that can be accessed by a computer. However, the memory is not limited thereto.

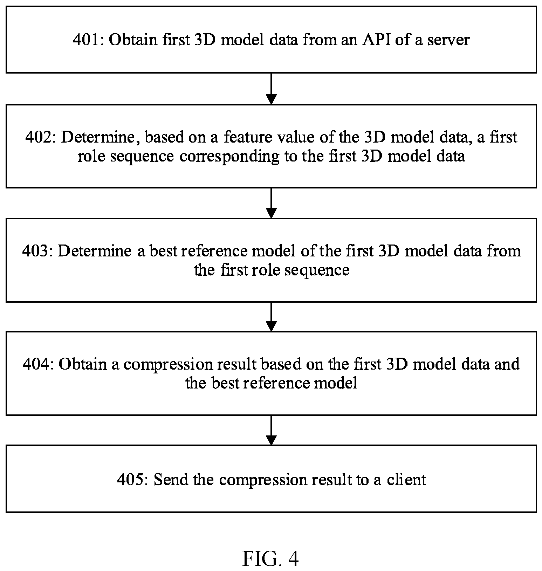

FIG. 4 is a flowchart of a 3D graphics data compression method according to an embodiment of this application.

The data compression method includes the following steps.

401: Obtain first 3D model data from an API of a server.

Running and calculation of a 3D application are completed by the server, and when running, the 3D application of the server invokes the API to obtain the 3D model data included in the API. It should be understood that the server obtains the 3D model data in a sequence of generating the 3D model data when the 3D application runs.

402: Determine, based on a feature value of the 3D model data, a first role sequence corresponding to the first 3D model data.

It should be understood that the feature value of the 3D model is used to represent one or more of a shape feature, a spatial structure feature, a texture feature, or a color feature of the 3D model. The shape feature includes a point, line, surface feature such as vertex coordinates, a normal vector feature, and the like. The spatial structure feature includes location information, motion information, and the like of the 3D model. For example, the feature value of the 3D model includes one or more of a vertex quantity, texture coordinates, a vertex attribute, a HASH value of a texture map, or a model identifier. Alternatively, it may be considered that the feature value of the 3D model includes an attribute used to distinguish the 3D model data. 3D model data belonging to a same animated role has a same feature value, and different animated roles have different feature values. For example, 3D model data of a character role A and a monkey role B has different feature values; and a series of actions and attitudes of the character role A are represented by using a plurality of pieces of 3D model data, and the plurality of pieces of 3D model data belonging to the character role A has a same feature value.

The first role sequence has the same feature value as the first 3D model data, or the first 3D model data is one of a plurality of pieces of 3D model data in the first role sequence.

In this embodiment of this application, 3D model data sent by the server to a client before the first 3D model data is obtained is referred to as historical 3D model data.

Optionally, the determining, based on a feature value of the 3D model data, a first role sequence corresponding to the first 3D model data includes:

classifying the historical 3D model data based on the feature value of the 3D model data to obtain a role sequence list, where the role sequence list includes one or more role sequences; and determining the first role sequence from the role sequence list. For example, the historical 3D model data may be classified by comparing feature values of 3D model data, or the historical 3D model data may be classified based on the feature value by using a deep learning classification method or a support vector machine classification method.

Optionally, the determining, based on a feature value of the 3D model data, a first role sequence corresponding to the first 3D model data includes:

determining that 3D model data that has the same feature value as the first 3D model data in the historical 3D model data belongs to the first role sequence, to obtain the first role sequence. It should be understood that, in this method, only the first role sequence that has the same feature value as the first 3D model data needs to be obtained without dividing the historical 3D model data into a plurality of role sequences.

403: Determine a best reference model of the first 3D model data from the first role sequence.

The best reference model is 3D model data that has highest similarity to the first 3D model data in the first role sequence. Optionally, when the best reference model is determined, a similarity value between the first 3D model data and the best reference model is obtained.

404: Obtain a compression result based on the first 3D model data and the best reference model.

The compression result is used to represent the first 3D model data.

Optionally, the similarity value between the first 3D model data and the best reference model is obtained, and a compression scheme of the first 3D model data is determined based on the similarity value.

Optionally, a range of the similarity value is determined. When the similarity value is less than or equal to a first threshold, a reference model identifier is obtained, where the reference model identifier is used to indicate the best reference model, and the compression result includes the reference model identifier; and the reference model identifier further includes a role sequence identifier.

When the similarity value is greater than the first threshold and is less than a second threshold, a residual value between the first 3D model data and the best reference model is calculated, and first compression is performed on the residual value to obtain a first data packet, where the compression result includes the first data packet; and the compression result further includes the reference model identifier and the role sequence identifier, and the role identifier is used to indicate the first role sequence.

When the similarity value is greater than or equal to the second threshold, second compression is performed on the first 3D model data to obtain a second data packet, where the compression result includes the second data packet; and the compression result further includes the role sequence identifier.

It should be understood that the first compression may include quantization, and the second compression may include draco compression. Alternatively, the first compression may be quantization and then entropy encoding, and the second compression may be another type of lossy or lossless compression. This is not limited in this embodiment of this application.

Optionally, the method further includes: 405. Send the compression result to the client.

Optionally, lossless compression is performed on the compression result, and then the lossless compression result is sent to the client.

For example, when the similarity value is less than or equal to the first threshold, lossless compression is performed on the reference model identifier and the role sequence identifier, and then the lossless compression result is sent to the client.

When the similarity value is greater than the first threshold and less than the second threshold, lossless compression is performed on the first data packet, the reference model identifier, and the role sequence identifier, and then the lossless compression result is sent to the client.

When the similarity value is greater than or equal to the second threshold, lossless compression is performed on the role sequence identifier and the second data packet, and then the lossless compression result is sent to the client.

In this embodiment of this application, before the 3D graphics data is compressed, the historical 3D model data that has been sent to the client is first classified, an animated role corresponding to the currently sent 3D model data is obtained, and a 3D model data sequence of the animated role is searched for a reference model, thereby reducing a size of model search space. Further, the data is compressed based on a feature that there is much redundant information between a 3D model and a reference model, thereby reducing redundant data and improving a compression ratio, without affecting fluency of a 3D animation.

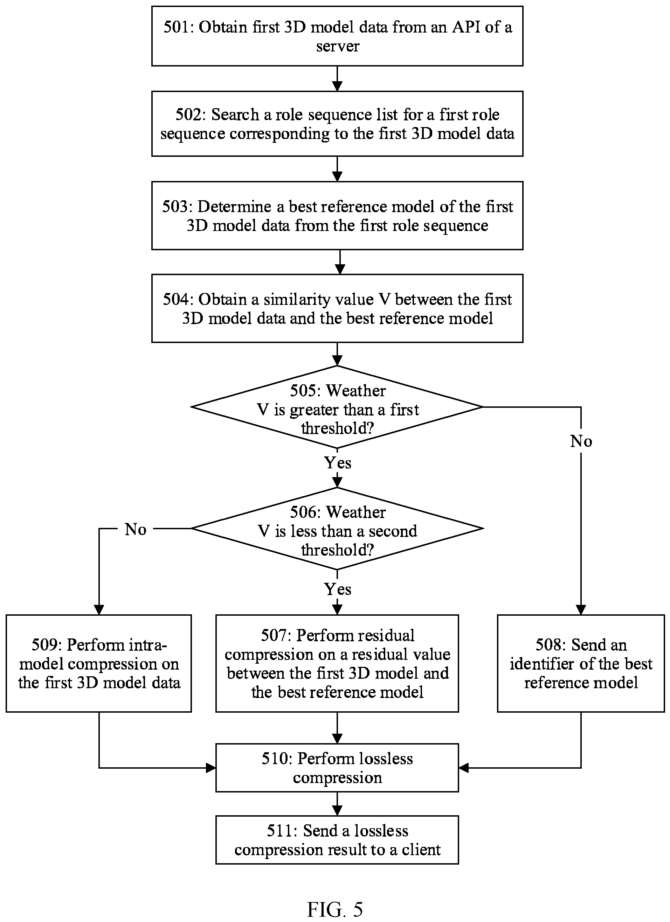

FIG. 5 is a flowchart of a 3D graphics data compression method according to this application.

The data compression method includes the following steps.

501: Obtain first 3D model data.

It should be understood that a 3D application of a server invokes a graphics API in a running process. The graphics API includes 3D model data. When the graphical API is sent to a GPU of the server, the 3D model data is parsed out from the API. For example, the graphical API includes but is not limited to an OpenGL, Direct3D, Vulkan, and the like. 3D model data that is output in the running process of the 3D application is obtained from the API.

502: Search a role sequence list for a first role sequence corresponding to the first 3D model data.

It should be understood that the role sequence list includes at least one role sequence, the role sequence is a set of reference models that have a same feature value, and one role sequence includes at least one reference model. Generally, it is considered that 3D models that have a same feature value belong to a same animated role. For example, there is a monkey and a child in a 3D animated scenario, 3D models constituting the role monkey has a same feature value, and likewise, 3D models constituting the role child also has a same feature value. Each role sequence in the role sequence list represents one animated role. The role sequence list is searched for the role sequence corresponding to the first 3D model data, which may be considered that the first 3D model data is classified to find a role sequence to which the current 3D model belongs. Specifically, the first role sequence corresponding to the first 3D model data may be a role sequence that has a same feature value as the first 3D model data. For example, the feature value includes but is not limited to a vertex quantity, a vertex attribute, a HASH value of a texture map, a shader, texture coordinates, and a model ID, and the vertex attribute includes a vertex attribute length.

Optionally, the role sequence list is obtained by classifying obtained 3D model data. For example, the obtained 3D model data may be classified based on the feature value of the 3D model data. For example, 3D model data that has a same feature value may be classified under one type. A 3D model data classification method may further include a deep learning classification method, a support vector machine classification method, and the like.

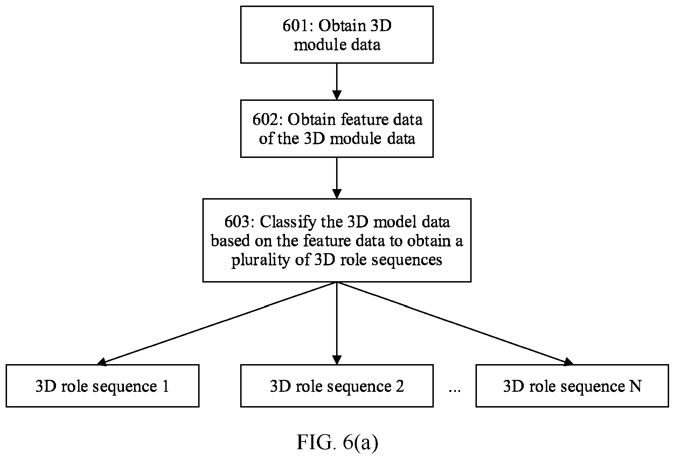

FIG. 6(a) is a flowchart of a 3D model data classification method according to an embodiment of this application.

The method includes the following steps:
601: Obtain 3D model data.

602: Extract feature data of the 3D model data.

For example, the feature data may be vertex quantities, vertex attribute values including vertex attribute lengths, HASH values of texture maps, or shaders of the 3D model data.

603: Classify the 3D model data based on the feature data to obtain a plurality of 3D role sequences.

For example, 3D model data that has a same vertex quantity may be considered as 3D models in a same role sequence, or 3D model data that has a same vertex attribute value may be considered as 3D models in a same role sequence. The obtained plurality of 3D role sequences may include a role sequence 1, a role sequence 2, ..., and a role sequence N.

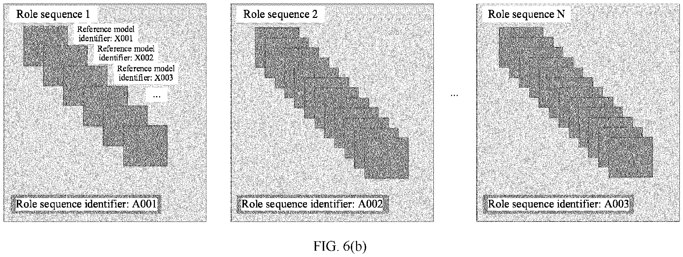

FIG. 6(b) shows a 3D model data classification result. Each role sequence has one role sequence identifier used to uniquely identify the role sequence, for example, "A001", "A002", ..., and "A00N" in FIG. 6(b). Each role sequence includes a plurality of pieces of 3D model data, and each piece of 3D model data has one reference model identifier used to uniquely identify the 3D model data, for example, "X001", "X002", ... in FIG. 6(b). It should be understood that the role sequence may include only one piece of 3D model data, and neither a quantity of role sequences nor a quantity of pieces of 3D model data included in the role sequence is limited in this embodiment of this application.

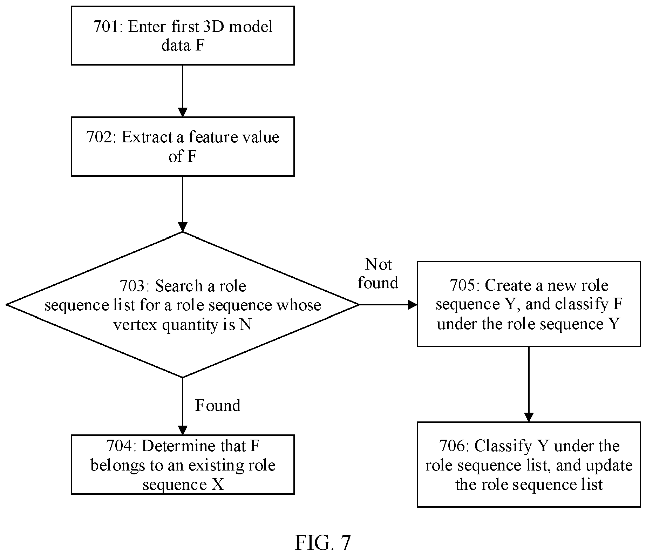

FIG. 7 is a flowchart of a method for searching a role sequence list for a role sequence corresponding to first 3D model data according to an embodiment of this application.

The method includes the following steps:

701: Enter first 3D model data F.

702: Extract a feature value of the first 3D model data F.

In this embodiment of this application, an example in which the feature value is a vertex quantity of the 3D model is used for description. The vertex quantity N of the first 3D model data is extracted.

703: Search a role sequence list for a role sequence whose vertex quantity is N.

In an optional case, if the role sequence list is empty, a role sequence 1 is created, and it is determined that the first 3D model data belongs to the role sequence 1.

In an optional case, to reduce a data amount, a server performs double compression on a reference model in the role sequence list: intra-model compression (first compression) and lossless compression (second compression), and then sends a compressed reference model to a client. The intra-model compression may be lossy compression, that is, a reference model obtained by the client is data obtained after lossy compression and then decompression. Therefore, the reference model obtained by the client may be deviated from an original reference model. To ensure consistency between the reference model of the server and the reference model of the client to avoid error transfer, in an optional case, intra-model compression is performed on the first 3D model data and then intra-model decompression is performed on intra-model compressed data to obtain processed 3D model data, and the processed 3D model data is used as a reference model in the role sequence 1.

If a role sequence whose vertex quantity is N is found in the role sequence list, step 704 is performed.

If no role sequence whose vertex quantity is N is found in the role sequence list, step 705 is performed.

704: Determine that F belongs to an existing role sequence X.

If the role sequence X whose vertex quantity is N exists in the role sequence list, it is considered that the first 3D model data F belongs to the role sequence X, in other words, the role sequence X is a first role sequence corresponding to the first 3D model data.

705: Create a new role sequence Y, and classify F under the role sequence Y.

It should be understood that if the first 3D model data does not correspond to any role sequence in the role sequence list, it indicates that the first 3D model data does not belong to any existing role sequence. In this case, a new role sequence should be created, and the first 3D model data is classified under the role sequence Y, where a vertex quantity of 3D model data in the role sequence Y is N.

706: Classify Y under the role sequence list, and update the role sequence list.

In an optional case, a role sequence identifier is added to the role sequence Y, and a role sequence identifier in the role sequence list is updated.

In an optional case, intra-model compression is performed on the first 3D model data and then intra-model decompression is performed on intra-model compressed data to obtain processed 3D model data, and the processed 3D model data is used as a reference model in the role sequence Y.

It should be understood that step 703 is repeated each time new 3D model data is received, and a new role sequence is continued to be created if no corresponding role sequence is found in an existing role sequence list.

503: Search the first role sequence for a best reference model of the first 3D model data.

It should be understood that, if the first role sequence is empty, in other words, there is no 3D model data in the first role sequence, in this case, the first 3D model data is used as the best reference model, and the first 3D model data is sent to a client and listed in a first role sequence on a client side. In an optional case, after intra-model compression is performed on the first 3D model data and intra-model decompression is performed on intra-model compressed data, intra-model decompressed data is used as a reference model in the first role sequence. Correspondingly, intra-model compression is performed on the first 3D model data, and then intra-model compressed data is sent to the client. The client performs intra-model decompression on the obtained intra-model compressed data, and then use intra-model decompressed data as a reference model in the first role sequence.

For example, the best reference model may be 3D model data that has highest similarity to the first 3D model data, or the best reference model is a reference model closest to the current 3D model.

In this embodiment of this application, a method for calculating similarity between the current 3D model and a reference model in the role sequence includes but is not limited to: calculating a relative error sum of coordinate values of the two models, and using the relative error sum as a value for measuring the similarity between the models; calculating the similarity between the two models based on machine learning; calculating the similarity between the two models based on a neural network; or calculating a coefficient of variation (Coefficient of Variation, CV) value between the first 3D model data and the reference model, and using the CV value as the similarity value between the two reference models. The CV value is a normalized measure of a probability distribution dispersion degree. A CV is defined as a ratio of a standard deviation to an average. It may be considered that the CV value is an absolute value that reflects a data dispersion degree like a range, the standard deviation, and a variance. The CV value is dimensionless, and therefore impact of a measurement scale and a dimension of the two groups of model data can be eliminated, so that a comparison result is objective and accurate.

It should be understood that there may be a plurality of optional similarity values for measuring the similarity between the two models, and a similarity measurement criterion varies with selection of different similarity values. In an optional case, for example, a distance difference between vertex coordinates of the two models may be calculated. If the distance difference is used as a similarity value, a smaller distance difference between the two models indicates that the two models are closer. In this case, a smaller similarity value indicates higher similarity, and there is highest similarity when there is a smallest similarity value between the two models. In an optional case, when the similarity value between the two models is closer to 1, there is higher similarity between the two models. Neither the similarity value nor the similarity measurement criterion is limited in this application.

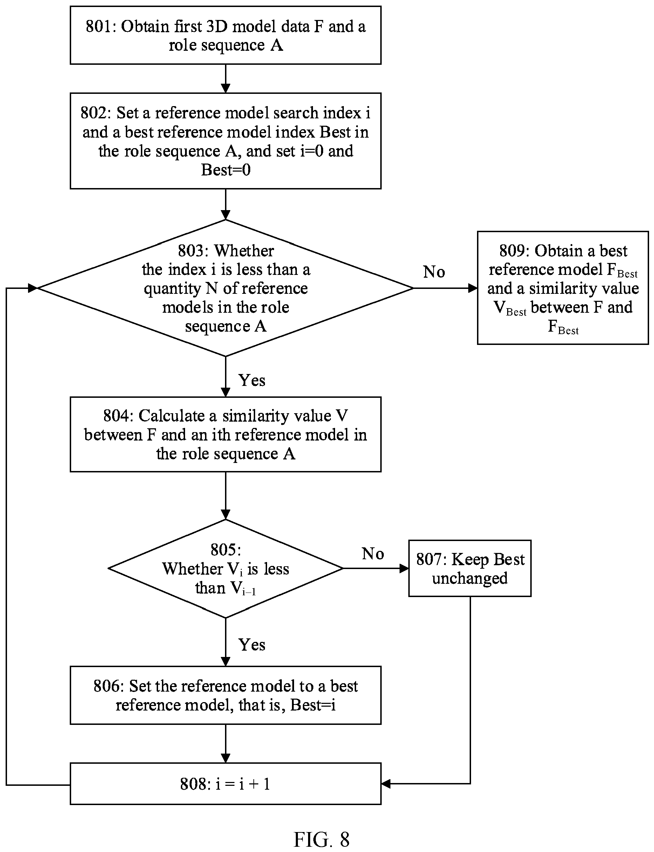

FIG. 8 is a flowchart of an example method for searching for a best reference model according to an embodiment of this application. In this method, a relative error sum of two models is used as a similarity value between the two models, and a smaller similarity value indicates higher similarity between the two models.

The method includes the following steps:

801: Obtain first 3D model data F and a role sequence A.

The role sequence A is a role sequence corresponding to the current 3D model, for example, may be a role sequence that has a same feature value as the current 3D model. Optionally, it is assumed that there are a total of N reference models in the role sequence A in this embodiment of this application.

802: Set a reference model search index i and a best reference model index Best in the role sequence A, and set i=0 and Best=0.

At the beginning of search, the first reference model in the role sequence A is set to a best reference model, where an index of the first reference model in the role sequence A is 0.

803: Determine whether the index i is less than the quantity N of reference models in the role sequence A.

If i < N, step 804 is performed.

If i ≥ N, step 809 is performed.

804: Calculate a similarity value V between the first 3D model data F and an ith reference model in the role sequence A.

It should be understood that the similarity value V may be a relative error sum. Absolute values of differences between X, Y, and Z coordinate values of each vertex of the current 3D model and X, Y, and Z coordinate values of each vertex of the ith reference model are obtained; and then percentages of the absolute values in the vertex coordinate values of the current 3D model are obtained, and error percentages of all vertices are accumulated.

Specifically, calculation manners are shown in formula (1) and formula (2):

$$V_X = \sum_{j=0}^{j=M-1} \left| \frac{F_{Xj} - A_{Xj}}{F_{Xj}} \right| * 100\% \qquad \text{formula (1);}$$

and

$$V = V_X + V_Y + V_Z \qquad \text{formula (2),}$$

where
j is an index of a reference model vertex, both the current 3D model F and the reference model in the role sequence A have M vertices, and M is an integer greater than or equal to 1. Formula (1) is an X-coordinate relative error sum, and calculation methods of a Y-coordinate relative error sum and a Z-coordinate relative error sum are the same as formula (1).

805: Determine whether a current similarity value Vi is less than $V_{i-1}$.

If Vi < $V_{i-1}$, step 806 is performed.

If Vi ≥ $V_{i-1}$, step 807 is performed.

806: Set a current reference model to the best reference model, that is, Best=i.

If a similarity value between a reference model with an index i in the role sequence A and the current 3D model F is less than a similarity value between a reference model with an index i-1 in the role sequence A and the current 3D model F, it indicates that there is higher similarity between the reference model with the index i and the current 3D model F, and the reference model with the index i is set to the best reference model.

807: Keep the best reference model index Best unchanged.

If the similarity value between the reference model with the index i in the role sequence A and the current 3D model F is greater than the previous similarity value, it indicates that there is higher similarity between the reference model to which the previous index number points and the current 3D model F, and the best reference model index is kept unchanged.

808: i = i + 1.

The search index plus 1 points to a next reference model in the role sequence A, and step 803 is returned until all the reference models in the role sequence A are traversed.

809: Obtain a best reference model $F_{Best}$ and a similarity value $V_{Best}$ between F and $F_{Best}$.

If the index i is not less than the quantity N of reference frames in the role sequence A, it indicates that all the reference models in the role sequence A have been traversed. In this case, a reference model to which the search index points is a reference model that has a smallest similarity value with the current 3D model, namely, the best reference model $F_{Best}$. A similarity value V in this case is the similarity value $V_{Best}$ between F and $F_{Best}$.

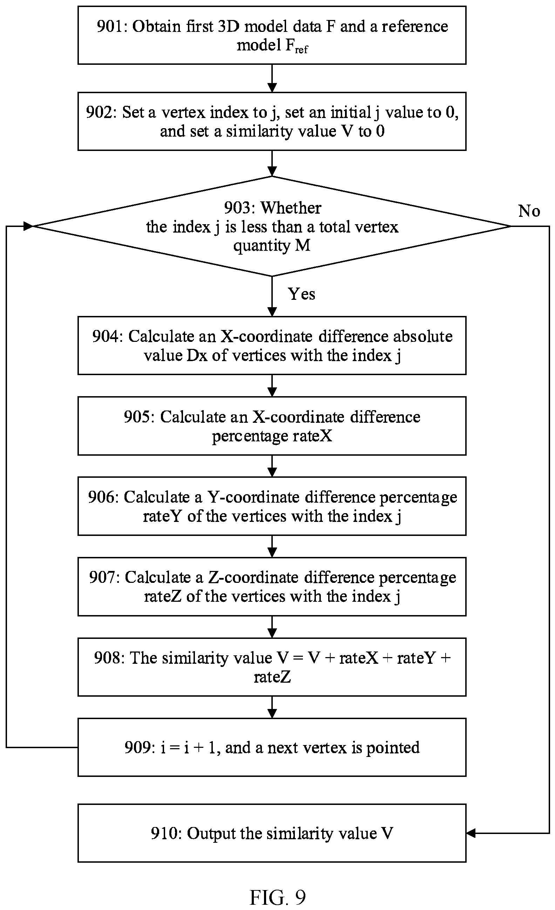

FIG. 9 is a flowchart of a similarity value calculation method according to an embodiment of this application. In this method, a relative error sum of vertices of two 3D models is used as a similarity value, and a smaller similarity value indicates higher similarity between the two models.

The method includes the following steps:

901: Obtain first 3D model data F and a reference model $F_{ref}$.

It should be understood that the reference model $F_{ref}$ is a reference model in a role sequence corresponding to the first 3D model data F, for example, may be a reference model in the first role sequence described above, may be a reference model in the role sequence X or Y in FIG. 7, or may be a reference model in the role sequence A. In addition, in this embodiment of this application, one reference model is used as an example to describe a similarity value calculation process, and the calculation process shown in FIG. 9 is performed for each reference model in the role sequence corresponding to F.

902: Set a vertex index to j, set an initial index value to 0, and set a similarity value V to 0.

The index value is set to 0 to point to the first vertex, and all vertices of F and $F_{ref}$ are traversed starting from the first vertex.

903: Determine whether the index j is less than a total vertex quantity M.

In this embodiment of this application, it is assumed that both the current 3D model F and the reference model $F_{ref}$ have a total of M vertices.

If j < M, step 904 is performed.

If j ≥ M, step 910 is performed.

904: Calculate an X-coordinate difference absolute value Dx = |F[j].x - $F_{ref}$[j].x| of vertices with the index j.

F[j].x is an X-coordinate value of a vertex with the index j in the current 3D model F, and $F_{ref}$[j].x is an X-coordinate value of a vertex with the index j in the reference model $F_{ref}$.

905: Calculate an X-coordinate difference percentage rateX.

$$\text{rateX} = \left| \frac{Dx}{F[j].x} \right| * 100\% \quad \text{formula (3)}$$

For example, a rateX calculation method is shown in formula (3).

906: Calculate a Y-coordinate difference percentage rateY of the vertices with the index j.

$$\text{rateY} = \left| \frac{Dy}{F[j].y} \right| * 100\% \quad \text{formula (4)}$$

For example, a rateY calculation method is shown in formula (4).

907: Calculate a Z-coordinate difference percentage rateZ of the vertices with the index j.

$$\text{rateZ} = \left| \frac{Dz}{F[j].z} \right| * 100\% \quad \text{formula (5)}$$

For example, a rateY calculation method is shown in formula (5).

908: Calculate a similarity value V and V = V + rateX + rateY + rateZ.

Herein, rateX, rateY, and rateZ are accumulated to obtain a coordinate relative error sum of the vertices with the index j. In a process of traversing all vertices, coordinate relative error sums of all the vertexes are accumulated.

909: i = i + 1.

A next vertex is pointed, and step 903 is returned until all the vertices are traversed.

910: Output the similarity value V

When the index j is greater than the total vertex quantity M of the model F, it indicates that all the vertices have been traversed. In this case, the similarity value V in step 908 is obtained by accumulating the X-, Y-, and Z-coordinate relative error sums of all the vertices, and the V value in this case is output as a similarity value between the current 3D model F and the reference model $F_{ref}$.

504: Obtain a similarity value V between the first 3D model data and the best reference model.

In the method for searching for a best reference model shown in FIG. 8, the similarity value between the first 3D model data and the best reference model is also obtained when the best reference model is obtained. In an optional case, if the similarity value between the first 3D model data and the best reference model is not output in some methods for searching for a best reference model, the similarity value V between F and $F_{Best}$ may be calculated according to the method shown in FIG. 9, or may be calculated based on another similarity value calculation algorithm This is not limited in this application.

505: Determine whether the similarity value V is greater than a first threshold.

If V > first threshold, step 506 is performed.

If V ≤ first threshold, step 508 is performed.

506: Determine whether the similarity value V is less than a second threshold.

If V < second threshold, step 507 is performed.

If V ≥ second threshold, step 509 is performed.

507: Perform residual compression on a residual value between the current 3D model F and the best reference model.

It should be understood that the residual value between the current 3D model F and the best reference model is an array having a same dimension as F, and the array includes information about differences between all points of F and the best reference model.

508: Send an identifier of the best reference model.

509: Perform intra-model compression on the first 3D model data.

For example, the intra-model compression includes but is not limited to draco compression.

It should be understood that the first threshold is less than the second threshold. If the similarity value V between the current 3D model and the best reference model is less than the first threshold, it is considered that the current 3D model is very close to the best reference model, and a residual between the current 3D model and the best reference model may be ignored. In this case, the current 3D model may be replaced with the best reference model. The server needs to send only the identifier of the best reference model to the client, and the client obtains the best reference model from the role sequence list based on the received identifier of the best reference model, and uses the best reference model as the first 3D model data. In this case, the client may uniquely determine the reference model from the role sequence list based on only the identifier of the best reference model. For example, this identification method is referred to as 1-level mapping identification, that is, no reference models with a same identifier exist between role sequences, and an identifier of a reference model is unrelated to a role sequence to which the reference model belongs.

In an optional case, the server sends both an identifier of the first role sequence corresponding to the first 3D model data and the identifier of the best reference model to the client, and the client first determines the corresponding first role sequence from the role sequence list based on the role sequence identifier, and then determines the best reference model from the first role sequence based on the identifier of the best reference model. For example, this identification method is referred to as 2-level mapping identification. A reference model in a role sequence has a unique identifier, but reference models with a same identifier may exist between a role sequence 1 and a role sequence 2. If the 2-level mapping identification method is used, when a reference model is added to a role sequence, only an identifier in the role sequence needs to be considered without considering an identifier in the entire role sequence list, so that the identifier is easy to maintain. When the 2-level mapping identification method is used, because the role sequence corresponding to the first 3D model data can be first determined, the reference model can be obtained by traversing only one role sequence without traversing the entire role sequence list.

If the similarity value V is greater than the first threshold and is less than the second threshold, it is considered that a data amount of the residual value between the first 3D model data F and the best reference model is far less than that of the first 3D model data F, an amount of data that needs to be transmitted during transmission of the residual value is smaller than an amount of data that needs to be transmitted during transmission of the model F, and bandwidth required during transmission of the residual value is also smaller than bandwidth required during transmission of the model F. After residual compression is performed on the residual value, a residual compression result is sent to the client. A data can be further compressed by performing residual compression on the residual value between the current 3D model and the best reference model. In order that the client can restore the current 3D model after receiving residual data, the client further needs to know the reference model corresponding to the residual data. Therefore, when sending the residual data, the server further needs to send the reference model identifier, and the client may uniquely determine the reference model from the role sequence list based on the reference model identifier. In another optional case, when the similarity value V is greater than the first threshold and less than the second threshold, the server sends compressed residual data, the role sequence identifier, and the reference model identifier to the client, and the client determines the role sequence corresponding to the first 3D model data from the role sequence list based on the role sequence identifier, and further determines the best reference model from the role sequence based on the reference sequence identifier.

In an optional case, the residual compression may be lossy compression. For example, the residual data may be quantized, for example, may be quantized by using 1 bit to 32 bits. When the data is quantized, a bit quantity of a floating-point number may be reduced, or a floating-point number may be changed to an integer. For example, a bit quantity 8 is selected for quantization, and a 32-bit floating-point number is represented by using 8 bits. In this way, a data amount obtained after the quantization becomes a quarter of an original data amount. It may be considered that the floating-point number is a continuous value, and an 8-bit integer is a discrete value. For example, an available quantization algorithm includes but is not limited to an LBG algorithm (Linde-Buzo-Gray algorithm), a Lloyd's algorithm (Lloyd's algorithm), a K-Means clustering algorithm, and the like. It should be understood that quantization can reduce a data volume and also cause a data precision loss, and the data amount can be further reduced by performing entropy encoding on a quantization result. Alternatively, the quantization result may be encoded by using a Huffman coding algorithm. The performing residual compression on the residual data may include: quantizing the residual data. Alternatively, the performing residual compression on the residual data may include: performing quantization and entropy encoding on the residual data. Alternatively, the performing residual compression on the residual data may include: performing quantization and Huffman coding on the residual data.

In an optional case, the residual compression may be lossless compression. A lossless compression algorithm includes but is not limited to lz4, zstd, an lzma, and the like.

If the similarity value V between the current 3D model and the best reference model is greater than the second threshold, it is considered that there is a relatively large difference between the current 3D model and the best reference model. A data amount of the difference between the current 3D model and the best reference model is not less than a data amount of the current 3D model. In this case, it is of little significance to calculate the residual value. In this case, intra-model compression is performed on the first 3D model data, and then intra-model compressed data is sent to the client. It should be understood that the intra-model compression is usually lossy compression, but lossless intra-model compression that may occur in the future is not excluded. When the similarity value V is greater than the second threshold, there is a relatively large difference between the current 3D model and the best reference model, in other words, there is a relatively large difference between any reference model in the first role sequence corresponding to the current 3D model and the current 3D model. In this case, the current 3D model may be classified under the first role sequence as a reference model, to be used as a reference model of subsequent 3D model data. Correspondingly, when the similarity value V is greater than the second threshold, the client also needs to classify the first 3D model data under the corresponding role sequence as a reference model. To let the client know a specific role sequence under which the first 3D model data is classified as a reference model, the role sequence identifier further needs to be sent to the client.

In an optional case, to reduce an amount of transmitted data, the client receives intra-model compressed 3D model data. To ensure consistency between a reference model of the server and a reference model of the client, intra-model compression is performed on the current 3D model and then intra-model decompression is performed on the intra-model compressed 3D model to obtain processed 3D model data, and the processed 3D model data is used as a reference model in the first role sequence.

In this embodiment of this application, different compression policies and data transmission policies may be selected based on the similarity value V between the first 3D model data and the best reference model. On the premise of ensuring accuracy of transmitted data, a data is compressed as much as possible, to reduce an amount of transmitted data, thereby reducing bandwidth required for data transmission.

The selecting different compression policies and data transmission policies based on the similarity value V may include:

when V is less than or equal to the first threshold, sending the identifier of the best reference model to the client, or sending the identifier of the best reference model and the role sequence identifier to the client;
when V is greater than the first threshold and less than the second threshold, performing residual compression on the residual value between the first 3D model data and the best reference model, and sending a compressed residual value and the identifier of the best reference model to the client, or sending a compressed residual value, the identifier of the best reference model, and the role sequence identifier to the client; or
when V is greater than or equal to the second threshold, performing intra-model compression on the first 3D model data, and sending an intra-model compression result and the role sequence identifier to the client; and performing intra-model decompression on the intra-model compression result to obtain the processed 3D model data, and using the processed 3D model data as a reference model in the first role sequence.

Optionally, the 3D graphics data compression method shown in FIG. 5 may further include: 510: Perform lossless compression.

511: Send the lossless compression result to the client.

When V is less than or equal to the first threshold, lossless compression may be performed on the identifier of the best reference model, and then the lossless compression result may be sent to the client; lossless compression may be performed on the best reference model and the role sequence identifier, and then the lossless compression result may be sent to the client. In this way, a data can be further compressed.

When V is greater than the first threshold and less than the second threshold, lossless compression may be performed on the compressed residual value and the identifier of the best reference model, and then the lossless compression result may be sent to the client; or lossless compression may be performed on the compressed residual value, the identifier of the best reference model, and the role sequence identifier, and then the lossless compression result may be sent to the client.

When V is greater than or equal to the second threshold, lossless compression may be performed on the intra-model compression result and the role sequence identifier, and then the lossless compression result may be sent to the client.

It should be understood that a lossless compression algorithm includes but is not limited to lz4, zstd, an lzma, and the like. In an optional case, the 3D data may be transmitted to the client in a form of a compressed data stream by using a network module. For example, the network module may be implemented by using software, for example, a TCP/UDP. Alternatively, the network module may be implemented by using hardware, for example, may be Wi-Fi, 4G, or wired Ethernet.

In this embodiment of this application, the 3D model data is first classified, and the role sequence corresponding to the 3D model is searched for the best reference model, thereby reducing a size of model search space. Further, the residual data is compressed based on a feature that there is much redundant information between 3D models, thereby reducing redundant data and improving a compression ratio.

In this embodiment of this application, different compression policies and data sending policies are flexibly selected based on the similarity value between the first 3D model data and the best reference model, so that similarity between the first 3D model and the reference model is fully used to more flexibly and efficiently compress the 3D model data. On the premise of ensuring accuracy of transmitted data, a data is compressed as much as possible, to reduce an amount of transmitted data, thereby reducing bandwidth required for data transmission.

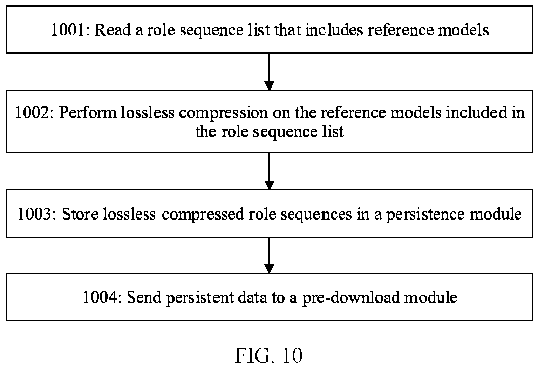

FIG. 10 is a flowchart of a method for making a reference model persistent according to an embodiment of this application.

The method includes the following steps:

1001: Read a role sequence list that includes reference models.

The role sequence list may be obtained in a process of classifying the first 3D model data, the role sequence list includes a plurality of role sequences, and each role sequence includes one or more reference models.

1002: Perform lossless compression on the reference models included in the role sequence list.

For example, a lossless compression algorithm includes but is not limited to lz4, zstd, an lzma, and the like.

1003: Store lossless compressed role sequences in a persistence module.

For example, the persistence module may be a hard disk or an SSD. The persistence module may be a hard disk built in a server or a client, and the server or the client may load the role sequence list from the persistence module. In an optional case, the persistence module may be independent of the server or the client, and the persistence module may be inserted into the server or the client.

Lossless compression is performed on the reference models in the animation list and the lossless compressed role sequences are stored in the persistence module. When a 3D application is run again, the server may directly load a reference model from the persistence module, thereby omitting a reference model calculation and accumulation process. The client may also directly load the reference model from the persistence module, thereby omitting a reference model transmission process, and reducing bandwidth during running of the 3D application. Some common reference models of the 3D application such as a large 3D game are usually stored in the persistence module, to facilitate reference model reuse.

Optionally, the method further includes: 1004. Send persistent data to a pre-download module.

For example, the pre-download module may be an application that provides downloading, such as a WEB server or a CDN. The CDN can be placed on a network edge node, to make download costs lower.

Both the server and the client may download the role sequence list that is of the 3D application and that includes the reference models from the pre-download module. Optionally, before running the 3D application, the server and the client first download the reference model list from a WEB server, a CDN, or the like. In this way, a reference model classification and accumulation process and a reference model transmission process are omitted during running of the 3D application, thereby reducing network bandwidth during running of the 3D application. Optionally, the reference model list may be downloaded from the CDN, the WEB server, or the like in a process of running the 3D application.

The role sequence list that includes the reference models and that is obtained in a classification process is stored in the persistence module, and a pre-download function is provided, so that reference model reuse can be implemented, thereby reducing running bandwidth of a 3D online application scenario.

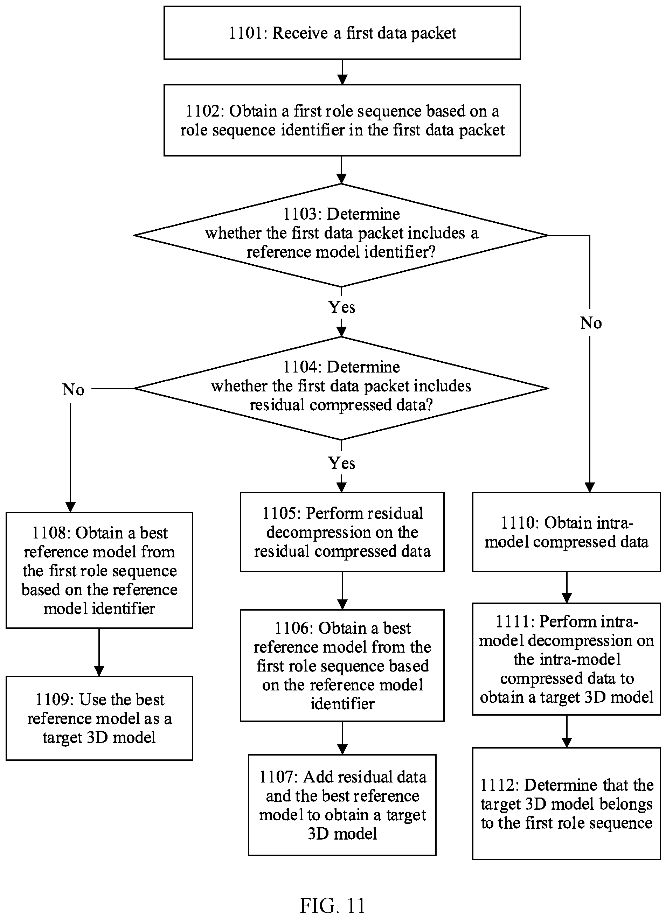

FIG. 11 is a flowchart of a data decompression method according to an embodiment of this application.

The data decompression method includes the following steps.

1101: Receive a first data packet.

For example, the first data packet may be a lossless compressed data packet, the first data packet includes a role sequence identifier and indication information of compressed data of first 3D model data sent by a server, the role sequence identifier is used to indicate a first role sequence that has a same feature value as the first 3D model data, the feature value is used to represent one or more of a shape feature, a spatial structure feature, a texture feature, or a color feature of the 3D model data, 3D model data that has a same feature value belongs to a same role sequence, and the first role sequence includes one or more pieces of 3D model data. For example, the indication information of the compressed data of the first 3D model data may be residual compressed data between the first 3D model data and a best reference model, or may be an intra-model compression result of the first 3D model data and an identifier of the best reference model.

It should be understood that the first data packet may be a lossless compression result of the foregoing information, and the first data packet may be sent by the server, or may be read from a memory. When the first data packet is the compression result of the foregoing information, the data compression method further includes: decompressing the first data packet to obtain the role sequence identifier and the indication information of the compressed data of the first 3D model data.

Optionally, 1102: Obtain the first role sequence based on the role sequence identifier in the first data packet.

Optionally, before 1102, the data decompression method may further include:

classifying received historical 3D model data to obtain a role sequence list; or downloading the role sequence list from a pre-download module, where the role sequence list includes the first role sequence.

1103: Determine whether the first data packet includes the reference model identifier.

If the first data packet includes the reference model identifier, step 1104 is performed.

If the first data packet does not include the reference model identifier, step 1110 is performed.

1104: Determine whether the first data packet includes the residual compressed data.

It should be understood that when the first data packet includes the best reference model, it needs to be further determined whether the first data packet includes the residual compressed data.

If the first data packet includes the residual compressed data, step 1105 is performed.

If the first data packet does not include the residual compressed data, step 1108 is performed.

1105: Perform residual decompression on the residual compressed data.

When the first data packet includes both the identifier of the best reference model and the residual compressed data, it indicates that the first 3D model data may be restored based on the best reference model and residual data. Residual decompression is performed on the residual compressed data to obtain the residual data. It should be understood that the residual decompression may include entropy decoding and dequantization. Optionally, the residual decompression may include only dequantization. If the server performs only quantization during residual compression, a client performs only dequantization during decompression. Correspondingly, if the server performs quantization and then entropy encoding during residual compression, the client needs to perform entropy decoding and then dequantization during residual decompression. The residual data obtained after the residual decompression is usually lossy data, but lossless residual compression that may occur in the future is not excluded, and the residual data obtained after the residual decompression may alternatively be lossless.

1106: Obtain the best reference model from the first role sequence based on the reference model identifier.

In an optional case, the best reference model may be uniquely determined from the role sequence list based on only the identifier of the best reference model.

1107: Add the residual data and the best reference model to obtain a target 3D model.

Because the residual data is a residual value between the first 3D model data and the best reference model, target 3D model data = residual data + best reference model.

1108: Obtain the best reference model from the first role sequence based on the reference model identifier.

If the first data packet includes the reference model identifier and does not include the residual compressed data, it indicates that the residual value between the first 3D model data and the best reference model is very small and can be ignored. In this case, the first 3D model data may be replaced with the best reference model. After the role sequence is obtained based on the role sequence identifier, the best reference model can be obtained by traversing only the first role sequence without traversing the entire role sequence list. This identification method belongs to 2-level mapping identification.

In an optional case, a second data packet may include only the reference model identifier and does not include the role sequence identifier, and the best reference model is obtained from the role sequence list based on the reference model identifier. This belongs to 1-level mapping identification.

1109: Use the best reference model as a target 3D model.

1110: Obtain intra-model compressed data.

When the first data packet does not include the identifier of the best reference model, it indicates that there is a relatively large difference between the first 3D model data and any reference model in the role sequence. In this case, it is of little significance to calculate the residual value between the first 3D model data and the best reference model, and the server transmits the intra-model compressed 3D model data. Therefore, the intra-model compressed data is obtained when the first data packet does not include the identifier of the best reference model.

1111: Perform intra-model decompression on the intra-model compressed data to obtain a target 3D model.

It should be understood that intra-model compression is usually lossy compression. Therefore, the intra-model decompression is lossless decompression, for example, may be a draco algorithm. The draco algorithm supports both a lossy mode and a lossless mode. However, lossless intra-model compression or lossless intra-model decompression that may occur in the future is not excluded. Decompressed data obtained after the intra-model decompression is used as the target 3D model data, and the target 3D model is the first 3D model data finally obtained by the client.

In an optional case, the method further includes: 1112. Determine that an intra-model decompression result belongs to the first role sequence.

In this embodiment of this application, a decompression algorithm is flexibly selected based on content of the first data packet, to ensure that the decompression algorithm corresponds to a compression algorithm of the server, thereby correctly decompressing the transmitted 3D model data. If the first data packet includes the identifier of the best reference model and the residual compressed data, residual decompression is performed on the residual compressed data, and the target 3D model is restored based on the residual data and the best reference model data. If the first data packet includes only the identifier of the best reference model, the best reference model is used as the target 3D model. If the first data packet does not include the reference model identifier, intra-model decompression is performed on the intra-model compressed data, the intra-model decompression result is used as the target 3D model, and the target 3D model data is classified under the first role sequence.

It should be understood that, for ease of description, the methods are described in a form of steps in FIG. 5, FIG. 6(a), and FIG. 7 to FIG. 11. Although the method sequences are shown in the method flowcharts FIG. 5, FIG. 6(a), and FIG. 7 to FIG. 11, in some cases, the described steps may be performed in sequences different from the sequences herein.

This embodiment of this application further provides a computer-readable storage medium. The computer-readable storage medium stores an instruction. When the instruction is run on a computer, the computer is enabled to perform one or more steps in any one of the foregoing methods. When component modules of the signal processing apparatus are implemented in a form of a software function unit and sold or used as an independent product, the component modules may be stored in the computer-readable storage medium.

Based on such an understanding, this embodiment of this application further provides a computer program product including an instruction. The technical solutions of this application essentially, or the part contributing to the prior art, or all or some of the technical solutions may be implemented in a form of a software product. The computer software product is stored in a storage medium and includes several instructions for instructing a computer device (which may be a personal computer, a server, or a network device) or a processor in the computer device to perform all or some of the steps of the methods described in the embodiments of this application.

The foregoing embodiments are merely intended for describing the technical solutions of this application, but not for limiting this application. Although this application is described in detail with reference to the foregoing embodiments, persons of ordinary skill in the art should understand that modifications may still be made to the technical solutions described in the foregoing embodiments or equivalent replacements may still be made to some technical features thereof, without departing from the scope of the technical solutions of the embodiments of this application. For example, for some specific operations in the apparatus embodiments, refer to the foregoing method embodiments.

The foregoing descriptions are merely specific implementations of the present invention, but are not intended to limit the protection scope of the present invention. Any variation or replacement readily figured out by persons skilled in the art within the technical scope disclosed in the present invention shall fall within the protection scope of the present invention. Therefore, the protection scope of the present invention shall be subject to the protection scope of the claims.

**Claims**

1. A 3D graphics data compression method, wherein the method comprises:

   obtaining first 3D model data from a graphics application programming interface API of a server;
   determining, based on a feature value of 3D model data, a first role sequence corresponding to the first 3D model data, wherein the feature value is used to represent one or more of a shape feature, a spatial structure feature, a texture feature, or a color feature of the 3D model data, 3D model data that has a same feature value belongs to a same role sequence, and the first role sequence comprises one or more pieces of 3D model data; determining 3D model data that has highest similarity to the first 3D model data from the first role sequence; and obtaining a compression result based on the first 3D model data and the 3D model data that has the highest similarity, wherein the compression result is used to represent the first 3D model data.

2. The method according to claim 1, wherein the obtaining a compression result based on the first 3D model data and the 3D model data that has the highest similarity comprises:

obtaining a similarity value between the first 3D model data and the 3D model data that has the highest similarity; and
determining a compression scheme of the first 3D model data based on the similarity value, and obtaining the compression result, wherein the compression result is used to represent the first 3D model data.

3. The method according to claim 2, wherein the determining a compression scheme of the first 3D model data based on the similarity value, and obtaining the compression result comprises:
when the similarity value is less than or equal to a first threshold, obtaining a reference model identifier, wherein the compression result comprises the reference model identifier, and the reference model identifier is used to indicate the 3D model data that has the highest similarity.

4. The method according to claim 2, wherein the determining a compression scheme of the first 3D model data based on the similarity value, and obtaining the compression result comprises:
when the similarity value is greater than the first threshold and less than a second threshold, performing first compression on a residual value between the first 3D model data and the 3D model data that has the highest similarity, to obtain a first data packet, wherein the compression result comprises the first data packet.

5. The method according to claim 2, wherein the determining a compression scheme of the first 3D model data based on the similarity value, and obtaining the compression result comprises:
when the similarity value is greater than or equal to the second threshold, performing second compression on the first 3D model data to obtain a second data packet, wherein the compression result comprises the second data packet.

6. The method according to claim 3, wherein the compression result further comprises an identifier of the first role sequence, and the method further comprises:
performing lossless compression on the reference model identifier and the identifier of the first role sequence, and then sending the lossless compression result to the client.

7. The method according to claim 4, wherein the compression result further comprises the reference model identifier and an identifier of the first role sequence, and the method further comprises:
performing lossless compression on the first data packet, the reference model identifier, and the identifier of the first role sequence, and then sending the lossless compression result to the client.

8. The method according to claim 5, wherein the compression data further comprises an identifier of the first role sequence, and the method further comprises:
performing lossless compression on the second data packet and the identifier of the first role sequence, and then sending the lossless compression result to the client.

9. The method according to claim 5 or 8, wherein the method further comprises:

decompressing the second data packet to obtain first processed 3D model data; and
determining that the first processed 3D model data belongs to the first role sequence.

10. The method according to any one of claims 6 to 9, wherein the first compression comprises quantization, and the second compression comprises draco compression.

11. The method according to any one of claims 1 to 10, wherein the determining, based on a feature value of the 3D model data, a first role sequence corresponding to the first 3D model data comprises:
determining that 3D model data that has the same feature value as the first 3D model data in historical 3D model data belongs to the first role sequence, to obtain the first role sequence, wherein the historical 3D model data comprises 3D model data sent to the client before the first 3D model data.

12. The method according to any one of claims 1 to 10, wherein the determining, based on a feature value of the 3D model data, a first role sequence corresponding to the first 3D model data comprises:

classifying historical 3D model data based on the feature value of the 3D model data to obtain a role sequence list, wherein the historical 3D model data comprises 3D model data sent to the client before the first 3D model data; and
determining a role sequence that has the same feature value as the first 3D model data in the role sequence list as the first role sequence.

13. The method according to any one of claims 1 to 12, wherein the determining 3D model data role sequence that has highest similarity to the first 3D model data from the first role sequence comprises:

separately calculating an X-coordinate relative error rate rateX, a Y-coordinate relative error rate rateY, and a Z-coordinate relative error rate rateZ of the first 3D model data to each piece of 3D model data in the first role sequence;
accumulating rateX, rateY, and rateZ to obtain a relative error sum of the first 3D model data to each piece of 3D model data in the first role sequence; and
using 3D model data corresponding to a smallest relative error sum as the 3D model data that has the highest similarity.

14. The method according to any one of claims 7 to 13, wherein the method further comprises:

performing lossless compression on 3D model data in the role sequence list to obtain lossless compressed data;
storing the lossless compressed data in a persistence module; and
transmitting the lossless compressed data to a pre-download module for downloading by the server or the client.

15. A 3D graphics data decompression method, wherein the method comprises:

receiving a first data packet, wherein the first data packet comprises a role sequence identifier and indication information of compressed data of first 3D model data sent by a server, the role sequence identifier is used to indicate a first role sequence that has a same feature value as the first 3D model data, the feature value is used to represent one or more of a shape feature, a spatial structure feature, a texture feature, or a color feature of the 3D model data, 3D model data that has a same feature value belongs to a same role sequence, and the first role sequence comprises one or more pieces of 3D model data; and
determining a decompression scheme of the compressed data of the first 3D model data based on the indication information of the compressed data of the first 3D model data and the first role sequence, and obtaining a decompression result of the first 3D model data.

16. The method according to claim 15, wherein the determining a decompression scheme of the compressed data of the first 3D model data based on the indication information of the compressed data of the first 3D model data and the first role sequence, and obtaining a decompression result of the first 3D model data comprises:

when the first data packet comprises residual compressed data and a reference model identifier, obtaining a first reference model from the first role sequence based on the reference model identifier, wherein the first reference model is data that has highest similarity to the first 3D model data in the first role sequence;
performing first decompression on the residual compressed data to obtain residual data, wherein the residual data is a residual value between the first 3D model data and the first reference model; and
adding the residual data and the first reference model to obtain the decompression result.

17. The method according to claim 15, wherein the determining a decompression scheme of the compressed data of the first 3D model data based on the indication information of the compressed data of the first 3D model data and the first role sequence, and obtaining a decompression result of the first 3D model data comprises:

when the first data packet comprises the reference model identifier and does not comprise the residual compressed data, obtaining the first reference model from the first role sequence based on the reference model identifier; and
using the first reference model as the decompression result.

18. The method according to claim 15, wherein the determining a decompression scheme of the compressed data of the first 3D model data based on the indication information of the compressed data of the first 3D model data and the first role sequence, and obtaining a decompression result of the first 3D model data comprises:
when the first data packet comprises intra-model compressed data and does not comprise the reference model identifier, performing second decompression on the intra-model compressed data to obtain the decompression result.

19. The method according to claim 18, wherein the method further comprises:
determining that the decompression result belongs to the first role sequence.

20. The method according to any one of claims 15 to 19, wherein the method further comprises:
classifying historical 3D model data based on the feature value to obtain a role sequence list, wherein the role sequence list comprises the first role sequence, and the historical 3D model data comprises 3D model data sent by the server before the first 3D model data.

21. The method according to any one of claims 15 to 19, wherein the method further comprises:
downloading a role sequence list from a pre-download module, wherein the role sequence list comprises the first role sequence.

22. A 3D graphics data compression apparatus, wherein the apparatus comprises:

a data obtaining module, configured to obtain first 3D model data from an application programming interface API;
a role classification module, configured to determine, based on a feature value of 3D model data, a first role sequence corresponding to the first 3D model data, wherein the feature value is used to represent one or more of a shape feature, a spatial structure feature, a texture feature, or a color feature of the 3D model data, 3D model data that has a same feature value belongs to a same role sequence, and the first role sequence comprises one or more pieces of 3D model data;
a reference model determining module, configured to determine 3D model data that has highest similarity to the first 3D model data from the first role sequence; and
a first compression module, configured to obtain a compression result based on the first 3D model data and the 3D model data that has the highest similarity, wherein the compression result is used to represent the first 3D model data.

23. The apparatus according to claim 22, wherein the first compression module is specifically configured to:

obtain a similarity value between the first 3D model data and the 3D model data that has the highest similarity; and
determine a compression scheme of the first 3D model data based on the similarity value, and obtain the compression result, wherein the compression result is used to represent the first 3D model data.

24. The apparatus according to claim 23, wherein when the similarity value is less than or equal to a first threshold, the first compression module is specifically configured to:
obtain a reference model identifier, wherein the compression result comprises the reference model identifier, and the reference model identifier is used to indicate the 3D model data that has the highest similarity.

25. The apparatus according to claim 23, wherein when the similarity value is greater than the first threshold and less than a second threshold, the first compression module is specifically configured to:
perform first compression on a residual value between the first 3D model data and the 3D model data that has the highest similarity, to obtain a first data packet, wherein the compression result comprises the first data packet.

26. The apparatus according to claim 23, wherein when the similarity value is greater than or equal to the second threshold, the first compression module is specifically configured to:
perform second compression on the first 3D model data to obtain a second data packet, wherein the compression result comprises the second data packet.

27. The apparatus according to any one of claims 22 to 26, wherein the role classification module is specifically configured to:

determine that 3D model data that has the same feature value as the first 3D model data in historical 3D model data belongs to the first role sequence, to obtain the first role sequence, wherein the historical 3D model data comprises 3D model data sent to a client before the first 3D model data.

28. The apparatus according to any one of claims 22 to 26, wherein the role classification module is specifically configured to:

classify historical 3D model data based on the feature value of the 3D model data to obtain a role sequence list, wherein the historical 3D model data comprises 3D model data sent to a client before the first 3D model data; and
determine a role sequence that has the same feature value as the first 3D model data in the role sequence list as the first role sequence.

29. The apparatus according to claim 27 or 28, wherein the apparatus further comprises a second compression module, wherein
when the similarity value is less than or equal to the first threshold, the compression result further comprises an identifier of the first role sequence, and the second compression module is configured to perform lossless compression on the reference model identifier and the identifier of the first role sequence, and then send the lossless compression result to the client;
when the similarity value is greater than the first threshold and less than the second threshold, the compression result further comprises the reference model identifier and the identifier of the first role sequence, and the second compression module is configured to perform lossless compression on the first data packet, the reference model identifier, and the identifier of the first role sequence, and then send the lossless compression result to the client; or
when the similarity value is greater than or equal to the second threshold, the compressed data further comprises the identifier of the first role sequence, and the second compression module is configured to perform lossless compression on the second data packet and the identifier of the first role sequence, and then send the lossless compression result to the client.

30. The apparatus according to any one of claims 26 to 29, wherein the apparatus further comprises a decompression module, wherein
when the similarity value is greater than or equal to the second threshold, the decompression module is configured to decompress the second data packet to obtain first processed 3D model data; and
determine that the first processed 3D model data belongs to the first role sequence.

31. The apparatus according to claims 22 to 30, wherein the reference model determining module is specifically configured to:

separately calculate an X-coordinate relative error rate rateX, a Y-coordinate relative error rate rateY, and a Z-coordinate relative error rate rateZ of the first 3D model data to each piece of 3D model data in the first role sequence;
accumulate rateX, rateY, and rateZ to obtain a relative error sum of the first 3D model data to each piece of 3D model data in the first role sequence; and
use 3D model data corresponding to a smallest relative error sum as the 3D model data that has the highest similarity.

32. The apparatus according to claims 28 to 31, wherein the apparatus further comprises a persistence module and a pre-download module, wherein
the persistence module is configured to store a lossless compression result of 3D model data in the role sequence list; and
the pre-download module is configured to store the lossless compression result for downloading by the server or the client.

33. A 3D graphics data decompression apparatus, wherein the apparatus comprises:

a receiving module, configured to receive a first data packet, wherein the first data packet comprises a role sequence identifier and indication information of compressed data of first 3D model data sent by a server, the role sequence identifier is used to indicate a first role sequence that has a same feature value as the first 3D model data, the feature value is used to represent one or more of a shape feature, a spatial structure feature, a texture feature, or a color feature of the 3D model data, 3D model data that has a same feature value belongs to a same role sequence, and the first role sequence comprises one or more pieces of 3D model data; and a decompression module, configured to determine a decompression scheme of the compressed data of the first 3D model data based on the indication information of the compressed data of the first 3D model data and the first role sequence, and obtain a decompression result of the first 3D model data.

34. The apparatus according to claim 33, wherein the decompression module is specifically configured to:

when the first data packet comprises residual compressed data and a reference model identifier, obtain a first reference model from the first role sequence based on the reference model identifier, wherein the first reference model is data that has highest similarity to the first 3D model data in the first role sequence; perform first decompression on the residual compressed data to obtain residual data, wherein the residual data is a residual value between the first 3D model data and the first reference model; and add the residual data and the first reference model to obtain the decompression result.

35. The apparatus according to claim 33, wherein the decompression module is specifically configured to:

when the first data packet comprises the reference model identifier and does not comprise the residual compressed data, obtain the first reference model from the first role sequence based on the reference model identifier; and use the first reference model as the decompression result.

36. The apparatus according to claim 33, wherein the decompression module is specifically configured to:
when the first data packet comprises intra-model compressed data and does not comprise the reference model identifier, perform second decompression on the intra-model compressed data to obtain the decompression result.

37. The apparatus according to claim 36, wherein the apparatus further comprises:
a determining module, configured to determine that the decompression result belongs to the first role sequence.

38. The apparatus according to claims 33 to 37, wherein the apparatus further comprises:
a role classification module, configured to classify historical 3D model data based on the feature value to obtain a role sequence list, wherein the role sequence list comprises the first role sequence, and the historical 3D model data comprises 3D model data sent by the server before the first 3D model data.

39. The apparatus according to claims 33 to 37, wherein the apparatus further comprises:
a pre-download module, configured to store a role sequence list, wherein the role sequence list comprises the first role sequence.

40. A 3D graphics data compression apparatus, wherein the apparatus comprises a processor and a receiving interface, wherein
the processor reads software instructions from a memory to implement the following operations:

obtaining, through the receiving interface, first 3D model data from a graphics application programming interface API of a server; determining, based on a feature value of the 3D model data, a first role sequence corresponding to the first 3D model data, wherein the feature value is used to represent one or more of a shape feature, a spatial structure feature, a texture feature, or a color feature of the 3D model data, 3D model data that has a same feature value belongs to a same role sequence, and the first role sequence comprises one or more pieces of 3D model data; determining 3D model data that has highest similarity to the first 3D model data from the first role sequence; and obtaining a compression result based on the first 3D model data and the 3D model data that has the highest similarity, wherein the compression result is used to represent the first 3D model data.

41. A 3D graphics data decompression apparatus, wherein the apparatus comprises a processor and a receiving interface, wherein
the receiving interface is configured to receive a first data packet, wherein the first data packet comprises a role sequence identifier and indication information of compressed data of first 3D model data sent by a server, the role sequence identifier is used to indicate a first role sequence that has a same feature value as the first 3D model data, the feature value is used to represent one or more of a shape feature, a spatial structure feature, a texture feature, or a color feature of the 3D model data, 3D model data that has a same feature value belongs to a same role sequence, and the first role sequence comprises one or more pieces of 3D model data; and
the processor reads software instructions from a memory to determine a decompression scheme of the compressed data of the first 3D model data based on the indication information of the compressed data of the first 3D model data and the first role sequence, and obtain a decompression result of the first 3D model data.

42. A computer-readable storage medium, wherein the computer-readable storage medium stores an instruction, and when the instruction is run on a computer or a processor, the computer or the processor is enabled to perform the method according to any one of claims 1 to 17.

43. A computer program product comprising an instruction, wherein when the computer program product is run on a computer or a processor, the computer or the processor is enabled to perform the method according to any one of claims 1 to 17.

FIG. 1

FIG. 2(a)

Server

3D application

↓

Graphics API

↓

GPU

↓

Animation classifier

↓

Reference frame
search module

↓

Decision module

Intra-model
compression
module

Residual
compression module

Reference model
identifier and
animation
sequence identifier

Intra-model
decompression
module

Lossless compression
module

↓

Network module

TO
FIG. 2(b)-2

FIG. 2(b)-1

31

CONT.
FROM
FIG. 2(b)-1

Client

Network module

Lossless decompression module

Determining module

Intra-model decompression module

Residual decompression module

Best reference module

Model data restoration module

Graphics API

GPU

FIG. 2(b)-2

FIG. 3

302

Codec

GPU

CPU

Memory

Display driver

Video/Graphics processing unit

Receiving interface

Input

Output

301

Codec

GPU

CPU

Memory

Sending interface

Video/Graphics processing unit

Receiving interface

401: Obtain first 3D model data from an API of a server

402: Determine, based on a feature value of the 3D model data, a first role sequence corresponding to the first 3D model data

403: Determine a best reference model of the first 3D model data from the first role sequence

404: Obtain a compression result based on the first 3D model data and the best reference model

405: Send the compression result to a client

FIG. 4

```
┌─────────────────────────────────────────┐
│ 501: Obtain first 3D model data from an  │
│             API of a server              │
└─────────────────────────────────────────┘
                    │
                    ▼
┌─────────────────────────────────────────┐
│ 502: Search a role sequence list for a   │
│ first role sequence corresponding to the │
│           first 3D model data            │
└─────────────────────────────────────────┘
                    │
                    ▼
┌─────────────────────────────────────────┐
│ 503: Determine a best reference model of │
│  the first 3D model data from the first  │
│              role sequence               │
└─────────────────────────────────────────┘
                    │
                    ▼
┌─────────────────────────────────────────┐
│ 504: Obtain a similarity value V between │
│  the first 3D model data and the best    │
│             reference model              │
└─────────────────────────────────────────┘
                    │
                    ▼
            ╱────────────╲
           ╱ 505: Weather  ╲
          ╱ V is greater than ╲──────── No ────┐
           ╲  a first threshold? ╱              │
            ╲────────────╱                      │
                  │                             │
                 Yes                            │
                  │                             │
                  ▼                             │
            ╱────────────╲                      │
   No ─────╱ 506: Weather  ╲                    │
   │        ╲ V is less than ╱                  │
   │          ╲ a second    ╱                   │
   │            ╲ threshold?╱                    │
   │              ╲──────╱                       │
   │                 │                           │
   │                Yes                          │
   │                 │                           │
   ▼                 ▼                           ▼
┌────────────┐ ┌──────────────────┐ ┌─────────────────┐
│509: Perform│ │507: Perform      │ │508: Send an     │
│intra-model │ │residual          │ │identifier of the│
│compression │ │compression on a  │ │best reference   │
│on the first│ │residual value    │ │model            │
│3D model    │ │between the first │ │                 │
│data        │ │3D model and the  │ │                 │
│            │ │best reference    │ │                 │
│            │ │model             │ │                 │
└────────────┘ └──────────────────┘ └─────────────────┘
      │               │                     │
      └───────┐       │       ┌─────────────┘
              ▼       ▼       ▼
          ┌─────────────────────────┐
          │ 510: Perform lossless    │
          │      compression         │
          └─────────────────────────┘
                    │
                    ▼
          ┌─────────────────────────┐
          │ 511: Send a lossless     │
          │ compression result to a  │
          │         client           │
          └─────────────────────────┘
```

FIG. 5

```
┌─────────────────────────┐
│    601: Obtain 3D       │
│    module data          │
└─────────────────────────┘
            │
            ▼
┌─────────────────────────┐
│  602: Obtain feature data│
│  of the 3D module data   │
└─────────────────────────┘
            │
            ▼
┌─────────────────────────────┐
│  603: Classify the 3D model │
│  data based on the feature  │
│  data to obtain a plurality │
│  of 3D role sequences       │
└─────────────────────────────┘
```

| 3D role sequence 1 | 3D role sequence 2 | ... | 3D role sequence N |

FIG. 6(a)

**Role sequence 1**

Reference model
identifier: X001

Reference model
identifier: X002

Reference model
identifier: X003

...

Role sequence identifier: A001

**Role sequence 2**

Role sequence identifier: A002

...

**Role sequence N**

Role sequence identifier: A003

FIG. 6(b)

701: Enter first 3D model data F

702: Extract a feature value of F

703: Search a role sequence list for a role sequence whose vertex quantity is N

Not found

705: Create a new role sequence Y, and classify F under the role sequence Y

Found

704: Determine that F belongs to an existing role sequence X

706: Classify Y under the role sequence list, and update the role sequence list

FIG. 7

801: Obtain first 3D model data F and a role sequence A

802: Set a reference model search index i and a best reference model index Best in the role sequence A, and set i=0 and Best=0

803: Whether the index i is less than a quantity N of reference models in the role sequence A

No → 809: Obtain a best reference model $F_{Best}$ and a similarity value $V_{Best}$ between F and $F_{Best}$

Yes

804: Calculate a similarity value V between F and an ith reference model in the role sequence A

805: Whether $V_i$ is less than $V_{i-1}$

No → 807: Keep Best unchanged

Yes

806: Set the reference model to a best reference model, that is, Best=i

808: i = i + 1

FIG. 8

901: Obtain first 3D model data F and a reference model $F_{ref}$

902: Set a vertex index to j, set an initial j value to 0, and set a similarity value V to 0

903: Whether the index j is less than a total vertex quantity M

No

Yes

904: Calculate an X-coordinate difference absolute value Dx of vertices with the index j

905: Calculate an X-coordinate difference percentage rateX

906: Calculate a Y-coordinate difference percentage rateY of the vertices with the index j

907: Calculate a Z-coordinate difference percentage rateZ of the vertices with the index j

908: The similarity value V = V + rateX + rateY + rateZ

909: i = i + 1, and a next vertex is pointed

910: Output the similarity value V

FIG. 9

1001: Read a role sequence list that includes reference models

1002: Perform lossless compression on the reference models included in the role sequence list

1003: Store lossless compressed role sequences in a persistence module

1004: Send persistent data to a pre-download module

FIG. 10

1101: Receive a first data packet

↓

1102: Obtain a first role sequence based on a role sequence identifier in the first data packet

↓

1103: Determine whether the first data packet includes a reference model identifier?

Yes ↓     No →

1104: Determine whether the first data packet includes residual compressed data?

No ←     Yes ↓

1108: Obtain a best reference model from the first role sequence based on the reference model identifier

↓

1109: Use the best reference model as a target 3D model

1105: Perform residual decompression on the residual compressed data

↓

1106: Obtain a best reference model from the first role sequence based on the reference model identifier

↓

1107: Add residual data and the best reference model to obtain a target 3D model

1110: Obtain intra-model compressed data

↓

1111: Perform intra-model decompression on the intra-model compressed data to obtain a target 3D model

↓

1112: Determine that the target 3D model belongs to the first role sequence

FIG. 11

# EP 3 836 548 A1

<table>
<tr><td colspan="2">INTERNATIONAL SEARCH REPORT</td><td>International application No.<br><br>**PCT/CN2018/107530**</td></tr>
</table>

**A.    CLASSIFICATION OF SUBJECT MATTER**

H04N 19/54(2014.01)i；  H04N 13/00(2018.01)i

According to International Patent Classification (IPC) or to both national classification and IPC

**B.    FIELDS SEARCHED**

Minimum documentation searched (classification system followed by classification symbols)

H04N

Documentation searched other than minimum documentation to the extent that such documents are included in the fields searched

Electronic data base consulted during the international search (name of data base and, where practicable, search terms used)

CNABS, CNTXT, CNKI, VEN, IEEE, USTXT, WOTXT, EPTXT: 压缩, 3D, 模型, 特征, 相似, 残差, 阈值, compress, model, feature, similarity, residual, threshold

**C.    DOCUMENTS CONSIDERED TO BE RELEVANT**

| Category* | Citation of document, with indication, where appropriate, of the relevant passages | Relevant to claim No. |
|---|---|---|
| A | CN 103646414 A (JIA, JINYUAN) 19 March 2014 (2014-03-19)<br>entire document | 1-43 |
| A | CN 102172026 A (EUCLID DISCOVERIES LLC) 31 August 2011 (2011-08-31)<br>entire document | 1-43 |
| A | CN 104869425 A (XINYANG NORMAL UNIVERSITY) 26 August 2015 (2015-08-26)<br>entire document | 1-43 |
| A | US 2018173994 A1 (WAVEONE INC.) 21 June 2018 (2018-06-21)<br>entire document | 1-43 |

☐ Further documents are listed in the continuation of Box C.        ☑ See patent family annex.

| \* | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **10 June 2019** | **18 June 2019** |

| Name and mailing address of the ISA/CN | Authorized officer |
|---|---|
| **China National Intellectual Property Administration (ISA/ CN)**<br>**No. 6, Xitucheng Road, Jimenqiao, Haidian District, Beijing 100088**<br>**China** | |
| Facsimile No. **(86-10)62019451** | Telephone No. |

Form PCT/ISA/210 (second sheet) (January 2015)

INTERNATIONAL SEARCH REPORT
Information on patent family members

International application No.

**PCT/CN2018/107530**

| Patent document cited in search report | | | Publication date (day/month/year) | Patent family member(s) | | | Publication date (day/month/year) |
|---|---|---|---|---|---|---|---|
| CN | 103646414 | A | 19 March 2014 | None | | | |
| CN | 102172026 | A | 31 August 2011 | US | 2015189318 | A1 | 02 July 2015 |
| | | | | US | 2012155536 | A1 | 21 June 2012 |
| | | | | US | 8942283 | B2 | 27 January 2015 |
| | | | | CN | 102172026 | B | 09 September 2015 |
| | | | | TW | 201016016 | A | 16 April 2010 |
| | | | | US | 8964835 | B2 | 24 February 2015 |
| | | | | JP | 2012505600 | A | 01 March 2012 |
| | | | | EP | 2345256 | B1 | 14 March 2018 |
| | | | | CA | 2739482 | A1 | 15 April 2010 |
| | | | | WO | 2010042486 | A1 | 15 April 2010 |
| | | | | JP | 5567021 | B2 | 06 August 2014 |
| | | | | EP | 2345256 | A1 | 20 July 2011 |
| | | | | CA | 2739482 | C | 14 March 2017 |
| | | | | US | 2011182352 | A1 | 28 July 2011 |
| CN | 104869425 | A | 26 August 2015 | None | | | |
| US | 2018173994 | A1 | 21 June 2018 | US | 2018174047 | A1 | 21 June 2018 |
| | | | | US | 2018176570 | A1 | 21 June 2018 |
| | | | | US | 2018174275 | A1 | 21 June 2018 |
| | | | | US | 2018176578 | A1 | 21 June 2018 |
| | | | | US | 2018176576 | A1 | 21 June 2018 |
| | | | | US | 2018174052 | A1 | 21 June 2018 |

Form PCT/ISA/210 (patent family annex) (January 2015)